# EUROPÄISCHE PATENTSCHRIFT

(11) **EP 2 287 630 B1**
(45) Veröffentlichungstag und Bekanntmachung des Hinweises auf die Patenterteilung: **25.04.2012**
(21) Anmeldenummer: 09010731.9
(22) Anmeldetag: 20.08.2009
(51) Int. Cl.: G01S 7/487, G01S 17/10

(54) **Optoelektronische Erfassungsvorrichtung**
Optoelectronic recording device
Dispositif de saisie optoélectronique

(43) Veröffentlichungstag der Anmeldung: 23.02.2011
(73) Patentinhaber: SICK AG, 79183 Waldkirch (DE)
(72) Erfinder: Köhler, Michael, 22529 Hamburg (DE); Schulz, Roland, Dr., 22359 Hamburg (DE); Schmidt, Melanie, 22179 Hamburg (DE); Hölling, Andy, 22529 Hamburg (DE); Lages, Ullrich, Dr., 21031 Hamburg (DE)
(74) Vertreter: Manitz, Finsterwald & Partner GbR

(56) Entgegenhaltungen:
- DE-A1- 10 313 709
- DE-A1-102004 022 912

## Beschreibung

Die vorliegende Erfindung betrifft eine optoelektronische Erfassungsvorrichtung, insbesondere einen Laserscanner, sowie ein Verfahren, bei dem eine optoelektronische Erfassungsvorrichtung verwendet wird.

Optoelektronische Erfassungsvorrichtungen sind grundsätzlich bekannt und beispielsweise in der deutschen Patentanmeldung DE 103 41 548 A1 beschrieben.

Aus der europäischen Patentschrift EP 1 160 718 B1 ist ein Laserscanner bekannt, bei dem das Empfangslicht in einem Kernbereich zumindest teilweise abgeschattet wird und die Größe des Kernschattens des Empfangslichts durch Justiermittel variabel einstellbar ist. Durch die Einstellung der Größe des Kernschattens kann der minimale Abstand, bei dem ein nahes Objekt von dem Laserscanner noch erfasst werden kann, so eingestellt werden, dass Formtoleranzen der Empfangslinse ausgeglichen werden, ohne dass eine Anpassung der Position des Empfängers notwendig ist. Somit wird das Problem vermieden, dass durch eine nachträgliche Veränderung der Position des Empfängers ein verstärktes ungewolltes Erfassen von atmosphärischen Störungen wie Staubwolken, Dämpfen oder dergleichen hervorgerufen wird.

Aus der deutschen Patentanmeldung DE 44 12 044 A1 ist ein Entfernungssensor bekannt, der zwischen einer Empfangseinrichtung und einer Ablenkeinrichtung eine Abschirmvorrichtung aufweist, die Sendelichtstrahlen und Empfangslichtstrahlen voneinander trennt, um eine die Messwerte verfälschende Rückstreuung von Sendelichtstrahlen innerhalb der Sensorvorrichtung in den Empfänger auszuschließen.

Im Nahbereich weisen die bekannten Sensorvorrichtungen eine erhöhte Empfindlichkeit auf, was dazu führt, dass in diesem Bereich vorhandene atmosphärische Störungen verstärkt zu einer irrtümlichen Erfassung und Interpretation als Objekt führen.

Eine wie eingangs beschriebene optoelektronische Erfassungsvorrichtung kann insbesondere an Fahrzeugen zur Überwachung eines Bereichs vor und/oder neben dem Fahrzeug und zur Erkennung von in einem solchen Bereich befindlichen Objekten eingesetzt werden. Insbesondere in diesem Fall besteht das Problem, dass atmosphärische Störungen in dem überwachten Bereich wie zum Beispiel Regen, Staub, Gischt und dergleichen in einem Nahbereich der Sensorvorrichtung zu einer irrtümlichen Erfassung als Objekt führen können, auch wenn kein Objekt in dem Überwachungsbereich vorhanden ist.

Aus JP 59-142488 (zitiert in US 5,627,511) ist es bekannt, die Empfangsempfindlichkeit während der Ausbreitung der ausgesandten Strahlung zu verändern, nämlich von einer anfänglich relativ geringen Empfindlichkeit zu einer mit der Zeit zunehmenden Empfindlichkeit. Hierdurch soll verhindert werden, dass Nebel oder Schnee in einem Nahbereich versehentlich als Objekt gewertet wird.

DE 10 2004 022 912 A1 offenbart eine optoelektronische Erfassungsvorrichtung mit einer Sendeeinrichtung zur Aussendung von Sendestrahlungsbündeln und einer Empfangseinrichtung zum Erzeugen von den Sendestrahlungsbündeln zugeordneten Empfangssignalen, wobei die Empfangssignale mit unterschiedlichen Schwellwertverläufen verglichen werden, wobei ein erster Schwellwertverlauf in einem frühen Zeitintervall einen höheren Wert aufweist als ein zweiter Schwellwertverlauf in dem frühen Zeitintervall, und wobei überprüft wird, ob sich in der Nachbarschaft eines von einem Rauschpuls in einem Empfangssignal zunächst vorgetäuschten "Objektes" keine weiteren Reflexionen nachweisen lassen, um Rauschpulse von zu detektierenden Objekten zu unterscheiden.

DE 103 13 709 A1 offenbart eine optoelektronische Erfassungsvorrichtung mit einer Sendeeinrichtung zur Aussendung von Sendestrahlungsbündeln, einer Empfangseinrichtung zum Erzeugen von den Sendestrahlungsbündeln zugeordneten Empfangssignalen und mit einer Ablenkeinrichtung zum Abtasten eines Überwachungsbereichs der Erfassungsvorrichtung, wobei die Empfangssignale in einer Selektionseinheit mit mehreren Schwellwerten bewertet werden.

Aufgabe der Erfindung ist es, eine verbesserte optoelektronische Erfassungsvorrichtung der eingangs genannten Art sowie ein entsprechendes Verfahren zu schaffen, bei der bzw. dem eine irrtümliche Erfassung von atmosphärischen Störungen als Objekt vermieden wird und eine Unterscheidung zwischen Objekten einerseits und atmosphärischen Störungen andererseits ermöglicht wird.

Zur Lösung dieser Aufgabe sind eine Vorrichtung mit den Merkmalen des Anspruchs 1 und ein Verfahren mit den Merkmalen des Anspruchs 11 vorgesehen.

Vorteilhafte Ausführungsformen der Erfindung sind in den Unteransprüchen, der Beschreibung und den Zeichnungen beschrieben.

Die Sendeeinrichtung dient zur Aussendung mehrerer Sendestrahlungsbündel, welche zur Beleuchtung von im Erfassungsbereich vorhandenen Objekten dienen. Vorzugsweise wird optische Strahlung, das heißt elektromagnetische Strahlung im infraroten, sichtbaren oder ultravioletten Wellenlängenbereich, verwendet. Zumindest bei Verwendung optischer Strahlung weist die Sendeeinrichtung vorzugsweise eine Strahlungsquelle in Form eines Lasers oder wenigstens einer Laserdiode, vorzugsweise zur Abgabe von Strahlung im infraroten Bereich, auf. Zur Erzeugung der Sendestrahlungsbündel kann vorzugsweise zumindest eine im Strahlengang der abgegebenen elektromagnetischen Strahlung angeordnete strahlbildende oder strahlformende Einrichtung vorgesehen sein.

Prinzipiell kann die Aussendung eines Sendestrahlungsbündels zeitlich beliebig ausgedehnt sein. Vorzugsweise wird die Sendeeinrichtung allerdings in einem gepulsten Betrieb betrieben, sodass zwischen den Zeitintervallen der Aussendung von zeitlich aufeinanderfolgenden Sendestrahlungsbündeln ein zeitlicher Abstand besteht, welcher vorzugsweise größer ist als das Zeitintervall der Aussendung eines Sendestrahlungsbündels. In letzterem Fall kann die Sendeeinrichtung vorzugsweise einen pulsbetriebenen Laser oder eine pulsbetriebene Laserdiode aufweisen. Im Fall eines Pulsbetriebes der Sendeeinrichtung kann jeder Puls der Sendeeinrichtung die gleichzeitige Aussendung von jeweils einem Sendestrahlungsbündel aber auch von mehreren Sendestrahlungsbündeln bewirken, die sich in den Strahlengängen ihrer elektromagnetischen Strahlung unterscheiden.

Die von der Sendeeinrichtung in Form von Sendestrahlungsbündeln abgegebene elektromagnetische Strahlung wird erfindungsgemäß durch eine Ablenkeinrichtung in den Erfassungsbereich gelenkt. Insbesondere können die Sendestrahlungsbündel mittels der Ablenkeinrichtung über bzw. durch den Erfassungsbereich bewegt, vorzugsweise geschwenkt, werden.

Die Strahlung eines Sendestrahlungsbündels wird wenigstens teilweise von Objekten in dem Erfassungsbereich zurückgeworfen, wobei dies vorwiegend nicht in spiegelnder Weise geschieht.

Die aus dem Erfassungsbereich zurückgeworfene Strahlung ist mittels der Ablenkeinrichtung auf die Empfangseinrichtung lenkbar, welche zur Detektion der zurückgeworfenen Strahlung ausgebildet ist. Insbesondere kann sie hierzu wenigstens eine Sensoranordnung mit zumindest einem entsprechend ausgebildeten und für die Strahlung der Sendestrahlungsbündel empfindliches Sensorelement aufweisen. Die Empfangseinrichtung weist ein Empfangsfeld auf, aus dem Strahlung empfangbar, das heißt aus dem Strahlung zumindest einem für die Strahlung empfindlichen Sensorelement der Empfangseinrichtung zuführbar, ist und das insofern auch als Sichtfeld der Empfangseinrichtung bezeichnet werden kann.

Dadurch, dass die Ablenkeinrichtung sowohl zur Ablenkung von Sendestrahlungsbündeln als auch von aus dem Erfassungsbereich zurückgeworfenen Anteilen der Strahlung von Sendestrahlungsbündeln dient, werden Sendestrahlungsbündel und das Empfangsfeld von der Ablenkeinrichtung synchron und somit aufeinander abgestimmt bewegt. Von der Empfangseinrichtung wird aus dem Erfassungsbereich zurückgeworfene und innerhalb eines auf das Aussenden eines Sendestrahlungsbündels folgenden Messintervalls empfangene Strahlung desselben Sendestrahlungsbündels zum Erzeugen wenigstens eines dem Sendestrahlungsbündel zugeordneten Empfangssignals verwendet.

Vorzugsweise beginnt ein auf das Aussenden eines Sendestrahlungsbündels folgendes Messintervall mit dem Beginn des Aussendens desselben Sendestrahlungsbündels. Vorzugsweise besteht ein fester funktionaler Zusammenhang zwischen dem Wert des Empfangssignals zu einem Zeitpunkt und der Intensität der empfangenen zurückgeworfenen Strahlung des Sendestrahlungsbündels zum im Wesentlichen selben Zeitpunkt. Zumindest in diesem Fall wird das Empfangssignal vorzugsweise von zumindest einem für die empfangene Strahlung empfindlichen Sensorelement, dessen Ausgangssignal abhängig von der Leistung der von dem Sensorelement empfangenen Strahlung eines Sendestrahlungsbündels ist, bereitgestellt.

Die erfindungsgemäße Erfassungsvorrichtung kann insbesondere als mehrlagige Erfassungsvorrichtung ausgebildet sein. In diesem Fall ist die Empfangseinrichtung so ausgebildet, dass aus unterschiedlichen Ebenen des Erfassungsbereichs zurückgeworfene Anteile der Strahlung eines Sendestrahlungsbündels jeweils zur Erzeugung eines der jeweiligen Ebene zugeordneten Empfangssignals empfangen werden.

Prinzipiell kann durch die Empfangseinrichtung auch ein von einer Phasendifferenz zwischen einem von einem Sensorelement erzeugten Ausgangssignal und einem amplitudenmodulierten Sendesignal, mit dem die Sendeeinrichtung zur Aussendung des jeweiligen Sendestrahlungsbündels beaufschlagt wird, abhängiges Empfangssignal erzeugt werden. In diesem Fall kann eine Erfassung von in dem Überwachungsbereich befindlichen Objekten und insbesondere die Bestimmung der Objektentfernungen anhand dieser Phasendifferenz geschehen.

Die Auswerteeinrichtung der erfindungsgemäßen optoelektronischen Erfassungsvorrichtung ist dazu ausgebildet, ein Empfangssignal eines Sendestrahlungsbündels während des Messintervalls des Sendestrahlungsbündels mit wenigstens einem von verschiedenen vorgegebenen Schwellwertverläufen zu vergleichen und auf ein Überschreiten des jeweiligen Schwellwertverlaufs zu überprüfen. Hierbei sind zumindest ein erster und ein zweiter Schwellwertverlauf vorgegeben, was es ermöglicht, zumindest eine Teilmenge der Empfangssignale mit dem ersten und eine Teilmenge der Empfangssignale mit dem zweiten Schwellwertverlauf zu vergleichen.

Hierzu umfasst die Auswerteeinrichtung bevorzugt wenigstens einen Schwellwertentscheider.

Jeder Schwellwertverlauf beschreibt den zeitlichen Verlauf eines zu vergleichenden Schwellwerts relativ zu dem Messintervall des jeweiligen Sendestrahlungsbündels. Mit anderen Worten ist also die Zeitachse der Schwellwertverläufe relativ zu dem Messintervall des jeweiligen Sendestrahlungsbündels definiert. Bevorzugt fällt der früheste Zeitpunkt, zu dem die zwei Schwellwertverläufe jeweils einen Wert ungleich Null annehmen, mit dem Beginn des jeweiligen Messintervalls zusammen.

Vorzugsweise erfasst die Auswerteeinrichtung bei einem erkannten Überschreiten eines Schwellwertverlaufs durch ein Empfangssignal die zwischen dem Aussenden des Sendestrahlungsbündels, zu dem das Empfangssignal gehört, und dem Überschreiten des Schwellwerts verstrichene Zeit, um aus dieser Laufzeit der Strahlung unter Verwendung der Lichtgeschwindigkeit, mit der sich die Strahlung des Sendestrahlungsbündels ausbreitet, die Entfernung des im Erfassungsbereich befindlichen Objekts bzw. der atmosphärischen Störung von der Erfassungsvorrichtung zu bestimmen, das bzw. die die Strahlung zurückgeworfen hat. In diesem Fall erfasst die Auswerteeinrichtung vorzugsweise zusätzlich die aktuelle Winkelstellung der Ablenkeinrichtung, um daraus ableiten zu können, in welcher Winkelstellung oder Richtung sich das Objekt oder die atmosphärische Störung relativ zu der Erfassungsvorrichtung befindet.

In diesem Fall kann durch das Erfassen der Entfernung und der relativen Winkelstellung des Objekts bzw. der atmosphärischen Störung dessen bzw. deren Position relativ zu der Erfassungsvorrichtung bestimmt werden. Aus allen während eines Scans oder mehrerer Scans ermittelten Messwerten kann die Auswerteeinrichtung dann ein Abbild der Umgebung der Erfassungsvorrichtung erzeugen, welches in dem Überwachungsbereich befindliche Objekte und atmosphärische Störungen enthält.

Bei der erfindungsgemäßen Erfassungsvorrichtung handelt es sich bevorzugt um eine mehrzielfähige Erfassungsvorrichtung. Dies bedeutet, dass die Auswerteeinrichtung, nachdem ein Überschreiten eines Schwellwertverlaufs durch ein Empfangssignal erkannt wurde, ein weiteres auf das erste Überschreiten folgendes zweites Überschreiten des Schwellwertverlaufs durch dasselbe Empfangssignal noch erkennen kann oder zumindest dann erkennen kann, wenn die zweite Überschreitung einen zeitlichen Mindestabstand zu der ersten Überschreitung einhält.

In diesem Fall ist die Überprüfung eines Empfangssignals also nach einem erkannten Überschreiten eines Schwellwertverlaufs durch ein Empfangssignal gar nicht oder nur für einen begrenzten Zeitraum nicht mehr aktiv. Dadurch kann, wenn ein Teil eines Sendestrahlungsbündels durch ein nahes Objekt und ein anderer, das nahe Objekt verfehlender Teil des Sendestrahlungsbündels von einem weiter entfernten Objekt zurückgeworfen wird, durch die Auswerteeinrichtung das Vorhandensein beider Objekte erkannt und das Erzeugen zweier entsprechender Messwerte gewährleistet werden.

Erfindungsgemäß weisen ein erster vorgegebener Schwellwertverlauf ein erstes, bezogen auf das jeweilige Messintervall frühes, Zeitintervall auf, und ein zweiter vorgegebener und von dem ersten Schwellwertverlauf verschiedener Schwellwertverlauf ein zweites, bezogen auf das jeweilige Messintervall frühes, Zeitintervall auf, wobei über ein relativ zu dem jeweiligen Messintervall definierten Zeitbereich des ersten und zweiten Zeitintervalls hinweg der erste Schwellwertverlauf zumindest bereichsweise über dem zweiten Schwellwertverlauf liegt. Mit anderen Worten weisen der erste und der zweite Schwellwertverlauf einen gemeinsamen relativ zu einem jeweiligen Messintervall definierten Zeitbereich auf, welcher in einem bezogen auf das jeweilige Messintervall frühen Zeitintervall liegt und innerhalb dessen der erste Schwellwertverlauf oberhalb des zweiten Schwellwertverlaufs verläuft, also höhere Werte aufweist als der zweite Schwellwertverlauf.

Durch die verschiedenen vorgegebenen Schwellwertverläufe und das Vergleichen von Empfangssignalen mit den Schwellwertverläufen sowie die Überprüfung auf Überschreiten von zumindest einem dieser Schwellwertverläufe durch die Empfangssignale wird es ermöglicht, zwischen Objekten einerseits und atmosphärischen Störungen andererseits zu unterscheiden. Von Objekten zurückgeworfene Strahlung eines Sendestrahlungsbündels hat nämlich typischerweise eine höhere maximale Leistungsdichte als von atmosphärischen Störungen zurückgeworfene Strahlung.

Das Verwenden verschiedener vorgegebener Schwellwertverläufe erlaubt es, verschiedene Empfangssignale hinsichtlich der maximalen empfangenen Leistungsdichte unterschiedlich zu klassifizieren. Über mehrere Empfangssignale betrachtet entspricht diese unterschiedliche Klassifikation verschiedener Empfangssignale gewissermaßen einer Analog/Digital-Wandlung der Empfangssignale mit mehreren Stufen, ohne dass eine aufwendige Analog/ Digital-Wandlung eines einzelnen Empfangssignals mit mehreren Stufen erforderlich ist, obwohl dies erfindungsgemäß prinzipiell nicht ausgeschlossen ist.

Ein Überschreiten des ersten Schwellwertverlaufs durch ein Empfangssignal während des Zeitbereichs, in dem der erste Schwellwertverlauf höher ist als der zweite, deutet mit vergleichsweise hoher Wahrscheinlichkeit auf das Vorhandensein eines Objekts hin, während ein Überschreiten des zweiten Schwellwertverlaufs innerhalb des Zeitbereichs mit vergleichsweise geringerer Wahrscheinlichkeit auf das Vorhandensein eines Objekts hindeutet, da mit einer gewissen Wahrscheinlichkeit auch eine atmosphärische Störung vorhanden sein kann.

Somit wird es durch die verschiedenen vorgegebenen Schwellwertverläufe, mit denen die Auswerteeinrichtung arbeitet, ermöglicht, durch Interpretation der Ergebnisse der Überprüfungen der Empfangssignale eine Aussage über das Vorhandensein eines Objekts oder einer atmosphärischen Störung bzw. deren Wahrscheinlichkeit zu gewinnen. Eine solche Interpretation kann auf verschiedene Weisen geschehen.

Beispielsweise können die Anzahlen von Überschreitungen des ersten bzw. zweiten Schwellwertverlaufs durch Empfangssignale aus einer bestimmten Gruppe durch statistische Methoden ausgewertet werden. Ebenso kann eine Logik zugrunde gelegt werden, die eine bestimmte Interpretation damit verbindet, dass die Überprüfung von gemäß der Logik verknüpften Empfangssignalen bestimmte Überschreitungen ergeben hat bzw. nicht ergeben hat. Vorzugsweise wird bei der Interpretation wie nachfolgend beschrieben zumindest eine örtliche Nachbarschaftsbeziehung zwischen Sendestrahlungsbündeln ausgewertet.

Bevorzugt ist das erste Zeitintervall und/oder das zweite Zeitintervall so gewählt, dass es den Zeitbereich des jeweiligen Messintervalls abdeckt, der mit dem Nahfeld der Erfassungsvorrichtung korrespondiert, also innerhalb dessen sich elektromagnetische Strahlung eines Sendestrahlungsbündels von der Sendeeinrichtung zu einem in dem Nahfeld der Erfassungsvorrichtung befindlichen Objekt und von dem Objekt zurückgeworfene Strahlung des Sendestrahlungsbündels zurück zu der Empfangeseinrichtung ausbreitet. Vorzugsweise umfasst das Nahfeld der Erfassungsvorrichtung den Bereich bis zu etwa 15 m Abstand von der Erfassungsvorrichtung, sodass sich unter Berücksichtigung der Lichtgeschwindigkeit ein erstes und/ oder zweites Zeitintervall mit einer Zeitspanne von beispielsweise 0,3 µs ergibt. Das auch als Nahbereich bezeichnete Nahfeld kann aber in Abhängigkeit von der jeweiligen Anwendung bzw. den jeweiligen Bedingungen auch einen kleineren oder größeren Bereich umfassen.

Vorzugsweise ist der Verlauf des ersten Schwellwertverlaufs während des Zeitintervalls in Abhängigkeit von der Empfindlichkeit der Erfassungsvorrichtung in dem mit dem ersten Zeitintervall korrespondierenden Entfernungsbereich so gewählt, dass ein in dem Entfernungsbereich vorhandenes Objekt im Falle eines Zurückwerfens von Strahlung eines Sendestrahlungsbündels zu einem Überschreiten des ersten Schwellwertverlaufs durch das Empfangssignal des Sendestrahlungsbündels während des ersten Zeitintervalls führt, während eine in dem Entfernungsbereich vorhandene atmosphärische Störung zu einem Empfangssignal führt, welches im ersten Zeitintervall unterhalb des ersten Schwellwertverlaufes liegt. Ebenso ist bevorzugt, dass der zweite Schwellwertverlaufs während des zweiten Zeitintervalls so gewählt ist, dass ein in dem mit dem Zeitintervall korrespondierenden Entfernungsbereich vorhandenes Objekt und eine in dem Entfernungsbereich vorhandene atmosphärische Störung jeweils zu einem Empfangssignal führen, das den zweiten Schwellwertverlauf während des zweiten Zeitintervalls überschreitet, während, wenn der Entfernungsbereich frei ist, das erzeugte Empfangssignal den zweiten Schwellwertverlauf während des zweiten Intervalls unterschreitet. Hierbei ist es bei einer wie nachfolgend genauer beschriebenen Ausführungsform, die eine Dämpf- oder Ausblendeeinrichtung umfasst, besonders bevorzugt, wenn eine durch die Dämpf- oder Ausblendeeinrichtung bewirkte Reduzierung der Empfindlichkeit der Empfangsvorrichtung bei der Wahl der Schwellwertverläufe entsprechend den vorstehend beschriebenen Merkmalen berücksichtigt ist.

Vorzugsweise sind das erste Zeitintervall und das zweite Zeitintervall identisch und liegt der erste Schwellwertverlauf innerhalb des gesamten ersten bzw. zweiten Zeitintervalls oberhalb des zweiten Schwellwertverlaufs. Besonders bevorzugt ist es, wenn der erste Schwellwertverlauf in dem ersten Zeitintervall und der zweite Schwellwertverlauf in dem zweiten Zeitintervall jeweils einen zumindest im Wesentlichen konstanten Wert annehmen. In einer Ausführungsform der Erfindung entspricht der erste Schwellwertverlauf innerhalb des ersten Zeitintervalls zumindest im Wesentlichen einem ersten Konstantwert und in einem darauf folgenden späteren Zeitintervall zumindest im Wesentlichen einem zweiten Konstantwert und entspricht der zweite Schwellwertverlauf in dem zweiten Zeitintervall zumindest im Wesentlichen einem dritten Konstantwert und in einem späteren auf das zweite Zeitintervall folgenden Zeitintervall zumindest im Wesentlichen einem vierten Konstantwert. Hierbei ist es besonders bevorzugt, wenn der zweite, der dritte und der vierte Konstantwert zumindest im Wesentlichen identisch sind.

Der Verlauf des ersten und des zweiten Schwellwertverlaufes in einem auf das erste bzw. das zweite Zeitintervall folgenden Zeitintervall sind bevorzugt so angepasst, dass ein Objekt, das sich in dem mit dem jeweiligen Zeitintervall korrespondierenden Entfernungsbereich der Erfassungsvorrichtung befindet, zu einem Empfangssignal führt, welches den jeweiligen Schwellwertverlauf während des jeweiligen Zeitintervalls überschreitet, während das Empfangssignal bei freiem Entfernungsbereich den jeweiligen Schwellwertverlauf unterschreitet.

Erfindungsgemäß ist die Auswerteeinrichtung ausgebildet, um festzustellen, ob eine Überprüfung eines Empfangssignals eines Sendestrählungsbündels, welches in einer vorgegebenen örtlichen Nachbarschaftsbeziehung zu einem anderen Sendestrahlungsbündel steht, zu dem ein Empfangssignal gehört, bei dessen Überprüfung ein Überschreiten des zweiten Schwellwertverlaufs innerhalb des zweiten Zeitintervalls erkannt wurde, ein Überschreiten des ersten Schwellwertverlaufs innerhalb des ersten Zeitintervalls ergeben hat.

Da sowohl im Nahfeld befindliche Objekte als auch im Nahfeld vorhandene atmosphärische Störungen je nach Ausbildung des zweiten Schwellwertverlaufs prinzipiell zu einem Empfangssignal führen können, welches den zweiten Schwellwertverlauf innerhalb des zweiten Zeitintervalls überschreitet, ist bei Erkennen eines solchen Überschreitens durch eine entsprechende Prüfung alleine nicht klar, ob sich in dem überwachten Nahfeld ein Objekt, eine atmosphärische Störung oder beides befindet.

Es kann jedoch davon ausgegangen werden, dass sich entweder eine atmosphärische Störung oder ein Objekt in dem Nahfeld befindet. Bei der vorstehend beschriebenen Ausführungsform wird nun der Umstand zu Nutze gemacht, dass im Falle dessen, dass die Überschreitung des zweiten Schwellwertverlaufs durch das Empfangssignal von einem Objekt und nicht lediglich von einer atmosphärischen Störung herrührt, ein Sendestrahlungsbündel, welches zu dem einen Sendestrahlungsbündel benachbart ist und mit dem ersten Schwellwertverlauf verglichen bzw. auf ein Überschreiten des ersten Schwellwertverlaufs überprüft wird, in aller Regel - d.h. mit ausreichend hoher Wahrscheinlichkeit - zu einem Überschreiten des ersten Schwellwertverlaufs während des ersten Zeitintervalls führt, da das benachbarte Sendestrahlungsbündel in aller Regel auf dasselbe Objekt getroffen ist, sodass Strahlung von ihm zurückgeworfen wurde.

Falls ein solches Überschreiten des ersten Schwellwertverlaufs durch ein örtlich benachbartes Sendestrahlungsbündel erkannt wird, kann man deshalb davon ausgehen, dass auch das Überschreiten des zweiten Schwellwertverlaufs durch das eine Sendestrahlungsbündel von einem Objekt und nicht lediglich von einer atmosphärischen Störung herrührt, und kann in diesem Fall das erkannte Überschreiten des zweiten Schwellwertverlaufs durch das eine Sendestrahlungsbündel als gültige Messung eines Objekts weiter verwenden. Im gegenteiligen Fall kann man davon ausgehen, dass das Überschreiten des zweiten Schwellwertverlaufs durch das eine Sendestrahlungsbündel lediglich von einer atmosphärischen Störung herrührt und kann somit das Vorhandensein einer atmosphärischen Störung schlussfolgern. Eine solche erkannte atmosphärische Störung kann vorzugsweise bei der weiteren Auswertung berücksichtigt werden.

In einer vorteilhaften Weiterbildung der vorstehend beschriebenen Ausführungsform wird das andere Sendestrahlungsbündel auf ein Überschreiten des ersten Schwellwertverlaufs in einem Teilbereich des ersten Zeitintervalls, welcher Teilbereich mit einem Entfernungsbereich korrespondiert, innerhalb dessen das anhand des Überschreitens des zweiten Schwellwertverlaufs durch das Empfangssignal des einen Sendestrahlungsbündels vermutete Objekt liegt, überprüft. Bei dieser Ausbildung wird also ausgenutzt, dass ein tatsächlich in dem Nahfeld des Überwachungsbereichs befindliches Objekt einen mehr oder weniger konstanten Abstand zu der Erfassungsvorrichtung aufweist und deshalb die Entfernung, die mit dem Zeitpunkt des Überschreitens des zweiten Schwellwertverlaufs durch das eine Sendestrahlungsbündel korrespondiert, und die Entfernung, die mit dem Zeitpunkt des Überschreitens des ersten Schwellwertverlaufs durch das andere Sendestrahlungsbündel korrespondiert, in der Regel zumindest bis auf einen geeignet gewählten Toleranzbereich identisch sind.

Eine vorgegebene örtliche Nachbarschaftsbeziehung kann prinzipiell jede Beziehung zwischen einem Sendestrahlungsbündel und einem anderen Sendestrahlungsbündel sein, aus der eine Aussage über die relative örtliche Anordnung zwischen den beiden Sendestrahlungsbündeln abgeleitet werden kann. Insbesondere kann eine vorgegebene Nachbarschaftsbeziehung abhängig von einer oder mehrerer aus einer Gruppe von Kenngrößen definiert sein, welche Gruppe den zeitlichen Abstand zwischen den Sendeintervallen beider Sendestrahlungsbündel, die Winkelstellung der Ablenkeinrichtung innerhalb der Zeitintervalle der Aussendung der Sendestrahlungsbündel, die Anzahl von zwischen der Aussendung beider Sendestrahlungsbündel vollendeten Scans der Erfassungsvorrichtung, der aktuelle Fahrzustand des Fahrzeugs, die relative Lage der zum Empfangen der Sendestrahlungsbündel jeweils verwendeten Sensorelemente der Empfangseinrichtung und die zur Aussendung der Sendestrahlungsbündel verwendete Strahlungsquelle bzw. verwendeten Strahlungsquellen umfasst.

Eine vorgegebene Nachbarschaftsbeziehung kann dementsprechend insbesondere zwischen Sendestrahlungsbündeln bestehen, die gleichzeitig von derselben oder von unterschiedlichen Strahlungsquellen ausgesendet wurden und, bei einer mehrlagigen Ausführung der Erfassungsvorrichtung, in unterschiedliche Ebenen der Erfassungsvorrichtung ausgesendet wurden, zwischen Sendestrahlungsbündeln, die, bei einer scan-weisen Abtastung des Überwachungsbereichs, innerhalb desselben Scans hintereinander ausgesendet wurden oder innerhalb verschiedener und insbesondere zeitlich direkt aufeinander folgender Scans bei einer bestimmten und insbesondere derselben Winkelstellung der Ablenkeinrichtung ausgesendet wurden.

Bei einer besonders vorteilhaften Ausführungsform der Erfindung ist eine vorgegebene örtliche Nachbarschaftsbeziehung so definiert, dass sie nur zwischen Sendestrahlungsbündeln besteht, die bis in eine vorgegebene Entfernung von der Ablenkeinrichtung auf demselben erwarteten Objekt liegen.

Vorzugsweise umfasst bei der zuletzt genannten Ausführungsform der bis in die vorgegebene Entfernung von der Ablenkeinrichtung reichende Bereich das Nahfeld der Erfassungsvorrichtung. Die vorgegebene örtliche Nachbarschaftsbeziehung ist bei dieser Ausführungsform also so definiert, dass zwei Sendestrahlungsbündel, zwischen denen die Nachbarschaftsbeziehung besteht, bis in eine vorgegebene Entfernung so zueinander angeordnet sind, dass ein erwartetes zu detektierendes Objekt, das Strahlung von einem Sendestrahlungsbündel zurückwirft, mit hoher Wahrscheinlichkeit aufgrund seiner erwarteten Anordnung und Dimension auch Strahlung von dem anderen Sendestrahlungsbündel zurückwirft. Im Fall einer Anwendung im Fahrzeugbereich können erwartete Objekte insbesondere Fahrzeugfronten, Leitplanken, Nummernschilder, Fahrzeuglichter und dergleichen sein.

Nach einer weiteren vorteilhaften Ausführungsform der Erfindung ist die Auswerteeinrichtung dazu ausgebildet, Empfangssignale zeitlich aufeinanderfolgender Sendestrahlungsbündel nach einer vorgegebenen Abfolge mit dem ersten Schwellwertverlauf oder mit dem zweiten Schwellwertverlauf zu vergleichen. Im Falle einer wie vorstehend beschriebenen Überprüfung von Sendestrahlungsbündeln auf Nachbarschaftsbeziehungen sind die vorgegebene Abfolge des Vergleichens mit dem ersten und dem zweiten Schwellwert und die vorgegebene Nachbarschaftsbeziehung bzw. die vorgegebenen Nachbarschaftsbeziehungen so aufeinander abgestimmt, dass von zwei Sendestrahlungsbündeln, die eine vorgegebene Nachbarschaftsbeziehung erfüllen, ein Sendestrahlungsbündel gemäß der vorgegebenen Abfolge mit dem ersten Schwellwertverlauf überprüft wird und das andere Sendestrahlungsbündel gemäß der vorgegebenen Abfolge mit dem zweiten Schwellwertverlauf überprüft wird.

Die vorgegebene Abfolge ist vorzugsweise so gewählt, dass ein Sendestrahlungsbündel, das gemäß der vorgegebenen Abfolge mit dem ersten Schwellwertverlauf überprüft wird, zumindest bis in eine vorgegebene Entfernung von der Ablenkeinrichtung auf demselben erwarteten Objekt liegt wie ein örtlich oder zeitlich zu dem Sendestrahlungsbündel nächstliegendes Sendestrahlungsbündel, welches gemäß der vorgegebenen Abfolge auch auf den ersten Schwellwertverlauf überprüft wird. Insbesondere ist eine abwechselnde Überprüfung von zeitlich aufeinanderfolgenden Sendestrahlungsbündeln mit dem ersten und dem zweiten Schwellwertverlauf vorgesehen.

Bei einer Ausführung der Empfangseinrichtung mit mehreren Sensorelementen, die jeweils zum Erzeugen eines einem Sendestrahlungsbündel zugeordneten Empfangssignals ausgebildet sind, kann im Rahmen der Erfindung vorgesehen sein, dass die Auswerteeinrichtung ein von einem Sensorelement erzeugtes Empfangssignal eines Sendestrahlungsbündels mit dem ersten Schwellwertverlauf vergleicht und auf dessen Überschreitung überprüft und ein von einem anderen Sensorelement erzeugtes Empfangssignal desselben Sendestrahlungsbündels mit dem zweiten Schwellwertverlauf vergleicht und auf dessen Überschreitung überprüft. In diesem Fall ist es bevorzugt, wenn die Empfangssignale zeitlich aufeinanderfolgender Sendestrahlungsbündel, die durch dasselbe Sensorelement erzeugt werden, nach einer vorgegebenen Abfolge und insbesondere abwechselnd mit dem ersten Schwellwertverlauf oder mit dem zweiten Schwellwertverlauf verglichen werden.

Nach einer bevorzugten Ausführungsform weist der Schnitt zumindest einer Teilmenge der Sendestrahlungsbündel mit einer in Empfangsrichtung der Erfassungsvorrichtung von der Ablenkeinrichtung beabstandeten, im Wesentlichen senkrecht auf der Empfangsrichtung stehenden Nahfeldebene eine Überlappung mit dem Schnitt des Empfangsfelds mit derselben Nahfeldebene auf und es ist eine Dämpf- oder Ausblendeeinrichtung vorgesehen, die ausgebildet und angeordnet ist, um den Anteil von aus dem Bereich der Überlappung zurückgeworfener Strahlung eines Sendestrahlungsbündels zu verringern, der von der Empfangseinrichtung empfangbar ist. Das Empfangsfeld der Empfangseinrichtung ist das Feld, aus dem Strahlung in Abwesenheit der Dämpf- oder Ausblendeeinrichtung empfangbar ist.

Der Abstand der Nahfeldebene von der Ablenkeinrichtung ist hierbei so groß, dass zumindest ein Teil der Nahfeldebene in dem Nahfeld der Empfangsvorrichtung liegt.

Durch eine solche Dämpf- oder Ausblendeeinrichtung wird die Empfindlichkeit der Empfangsvorrichtung für aus dem Nahfeld zurückgeworfene Strahlung reduziert, indem von aus dem Bereich der Überlappung zurückgeworfene Strahlung eines Sendestrahlungsbündels so abgeschattet wird, dass sie nicht oder nur teilweise von der Empfangseinrichtung empfangen werden kann.

Vorzugsweise ist die Ausblende- oder Dämpfeinrichtung so ausgebildet und angeordnet, dass sie nur einen Bereich abschattet, durch welchen in Abwesenheit der Dämpf- oder Ausblendeeinrichtung eine besonders hohe Leistungsdichte der aus dem Bereich der Überlappung zurückgeworfenen und bei Abwesenheit der Dämpf- oder Ausblendeeinrichtung von der Empfangseinrichtung empfangbaren Strahlung des Sendestrahlungsbündels auftreten würde. Durch diese nur begrenzte Abschattung kann die Überhöhung der Empfindlichkeit im Nahfeld wirksam reduziert werden, ohne dass die Empfindlichkeit für den restlichen Überwachungsbereich stark reduziert wird. Insbesondere ist bevorzugt, wenn die Dämpf- oder Aufblendeeinrichtung vollständig innerhalb eines Strahlkegels wirksam ist, durch den sich aus dem Bereich der Überlappung zurückgeworfene und in Abwesenheit der Dämpf- oder Ausblendeeinrichtung prinzipiell von der Empfangseinrichtung empfangbare Strahlung in Abwesenheit der Dämpf- oder Ausblendeeinrichtung ausbreiten würde.

Nach einer besonders bevorzugten Ausführungsform ist die Dämpf- oder Ausblendeeinrichtung als eine, insbesondere auf eine abbildende Einrichtung der Empfangseinrichtung aufgebrachte, Schwärzung ausgebildet, die beispielsweise aufgeklebt ist oder eine Lackierung umfasst. Eine solche Dämpf- oder Ausblendeeinrichtung kann mit besonders geringem Aufwand bereitgestellt werden. Falls die Empfangseinrichtung als abbildende Einrichtung eine Linse umfasst, kann die Dämpf oder Ausblendeeinrichtung vorzugsweise auf diese Linse aufgeklebt sein oder eine Lackierung der Linse umfassen.

Im Rahmen der Erfindung kann bevorzugt eine Reichweitenschätzung durchgeführt werden, indem eine atmosphärische Störung erkannt sowie klassifiziert oder quantifiziert wird und daraus eine Information über die momentane Reichweite der Erfassungsvorrichtung in Anbetracht der aktuellen atmosphärischen Verhältnisse abgeleitet wird.

Hierzu ist die Auswerteeinrichtung bevorzugt ausgebildet, um festzustellen, ob Überprüfungen bestimmter Empfangssignale auf Überschreiten jeweils eines bestimmten vorgegebenen Schwellwertverlaufs während eines frühen Zeitintervalls des jeweiligen Schwellwertverlaufs eine Kombination von erkannten Überschreitungen und Nicht-Überschreitungen der Schwellwertverläufe durch die Empfangssignale ergeben haben, welche Kombination ein vorgegebenes, eine atmosphärische Störung quantifizierendes oder klassifizierendes logisches Kriterium erfüllt, und dazu, bei erfülltem logischen Kriterium ein der atmosphärischen Störung entsprechendes Reichweitenschätzungsmerkmal zu generieren. Ein solches Arbeiten mit Schwellwertverläufen ist auch ein Arbeiten mit Kanälen im Sinne der Erfindung.

Generell kann erfindungsgemäß also eine Reichweitenschätzung durch Verwenden mehrerer unterschiedlicher Kanäle erfolgen. Die Kanäle können sich durch die zum Einsatz kommenden Schwellwertverläufe und/oder durch die Empfangsempfindlichkeit des oder der verwendeten Empfänger bzw. Sensorelemente unterscheiden.

In einer besonders einfachen Ausgestaltung dieser Ausführungsform kann die Auswerteeinrichtung hierbei zum Beispiel die Empfangssignale zweier benachbarter Sendestrahlungsbündel berücksichtigen, von denen eines mit dem ersten und das andere mit dem zweiten vorgegebenen Schwellwertverlauf verglichen und überprüft wurde, und ein Reichweitenschätzungsmerkmal generieren, wenn die Überprüfung des einen Empfangssignals keine Überschreitung des ersten Schwellwertverlaufs während des ersten Zeitintervalls ergeben hat, die Überprüfung des anderen Empfangssignals jedoch eine Überschreitung des zweiten Schwellwertverlaufs während des zweiten Zeitintervalls ergeben hat, woraus wie weiter vorne bereits beschrieben das Vorhandensein einer atmosphärischen Störung geschlussfolgert werden kann.

Bevorzugt bezieht sich ein logisches Kriterium auf mehr als zwei Empfangssignale. Um eine genauere Reichweiteninformation zu erhalten, bestehen außerdem bevorzugt mehrere solcher logischer Kriterien, die jeweils auf eine Vielzahl von Empfangssignalen angewendet werden. Bevorzugt werden Empfangssignale verwendet, die mit mehr als zwei verschiedenen vorgegebenen Schwellwertverläufen überprüft wurden, wobei die Schwellwertverläufe in einem frühen Zeitintervall verschiedene Höhen, beispielsweise verschiedene Konstantwerte, aufweisen. Der höchste Schwellwertverlauf kann dann so hoch sein, dass er in der Regel nur von Objekten im Nahbereich, nicht aber von atmosphärischen Störungen, überschritten wird. Bei einem Nicht-Überschreiten des höchsten Schwellwertverlaufs kann dann aus dem nächsthöchsten Schwellwertverlauf, der überschritten wird, auf die Stärke einer vorhandenen atmosphärischen Störung geschlossen werden. Das Vorhandensein und die Stärke einer atmosphärischen Störung kann also durch ein dementsprechendes logisches Kriterium erfasst und ein entsprechendes Reichweitenschätzungsmerkmal kann erzeugt werden. Das Reichweitenschätzungsmerkmal kann beispielsweise in einem abgespeicherten digitalen Reichweitenwert oder auch in einem Steuerungssignal zur Ausgabe einer Warnung oder einer Veränderung des Betriebs der Erfassungsvorrichtung bestehen.

Während durch die Verwendung vieler verschiedener Schwellwertverläufe selbst bei Vorhandensein nur eines einzigen Empfängers- bzw. Sensorelements bereits ein guter Dynamikbereich für die Reichweitenschätzung erreicht werden kann, weist die Empfangseinrichtung bevorzugt mehrere Sensorelemente auf, die zur Bildung mehrerer Kanäle zumindest im Nahbereich voneinander verschiedene Empfindlichkeiten oder Empfindlichkeitsverläufe gegenüber aus dem Überwachungsbereich zurückgeworfener Strahlung aufweisen. Durch abgestufte Empfindlichkeiten der einzelnen Kanäle weist jeder Kanal auch eine andere Empfindlichkeit für in dem Nahbereich vorhandene atmosphärische Störungen auf, sodass anhand der Detektion und Nicht-Detektion von atmosphärischen Störungen in den einzelnen Kanälen eine Aussage über die Stärke einer atmosphärischen Störung getroffen werden kann. Die verschiedenen Empfindlichkeiten bzw. Empfindlichkeitsverläufe können zum einen durch die Verwendung verschiedener Sensorelemente oder verschiedener Betriebsparameter der Sensorelemente, beispielsweise verschiedene Bias-Spannungen von Lawinenphotodioden, zum anderen aber auch durch verschiedene optische Anordnungen der Sensorelemente relativ zu der restlichen Empfangseinrichtung und/oder der Sendeeinrichtung oder, wie vorstehend bereits beschrieben, eine oder mehrere verschiedene Dämpfungs- oder Ausblendeeinrichtungen bewirkt werden, sowie durch eine Kombination der vorstehenden Merkmale.

Bevorzugt sind verschiedenen Sensorelementen verschiedene Schwellwertverläufe zugeordnet, mit denen von dem jeweiligen Sensorelement erzeugte Empfangssignale jeweils verglichen werden, sodass die Kombination aus Höhe des Schwellwertverlaufs und Empfindlichkeit im Nahbereich jedes Sensorelements dann auf eine bestimmte Stärke einer zu klassifizierenden atmosphärischen Störung eingestellt werden kann.

Eine ferner bevorzugte Ausführungsform der Erfindung sieht vor, dass die Auswerteeinrichtung ausgebildet ist, um zur Unterscheidung zwischen einem Objekt und einer atmosphärischen Störung die Kontur eines detektierten Objekts über mehrere Scans hinweg zu erfassen und zu überprüfen, wie sich die erfasste Kontur über die mehreren Scans hinweg verändert. Diese Ausführungsform der Erfindung nutzt den Umstand aus, dass ein Objekt im Allgemeinen eine klare Kontur aufweist, sodass sich im Falle eines Objekts im Überwachungsbereich eine Kontur des Objekts, welche von der Erfassungsvorrichtung aus den Empfangssignalen abgeleitet wird, nur geringfügig ändert. Dadurch, dass überprüft wird, wie sich die erfasste Kontur über mehrere Scans hinweg verändert, kann in Abhängigkeit von der überprüften Veränderung eine Aussage darüber getroffen werden, ob das Vorhandensein eines Objekts plausibel ist, wenn sich etwa die Kontur nur geringfügig verändert, oder ob das Vorhandensein lediglich einer atmosphärischen Störung plausibel ist, wenn sich die Kontur über die mehreren Scans hinweg signifikant verändert.

Ferner bevorzugt ist es, wenn zur Unterscheidung eines Objekts von einer atmosphärischen Störung überprüft wird, ob das Empfangssignal eines Sendestrahlungsbündels einen vorgegebenen Schwellwertverlauf innerhalb des Messintervalls mehrfach überschreitet. Diese Ausführungsform macht sich zunutze, dass ein Objekt im Allgemeinen lediglich zu einer Schwellwertüberschreitung führt, da ein Objekt im Allgemeinen intransparent ist und deshalb keine Mehrfachreflexionen erlaubt. Insbesondere kann überprüft werden, ob eine mehrfache Schwellwertüberschreitung in einem Bereich stattfindet, in dem das Sendestrahlungsbündel vollständig auf einem erwarteten Objekt liegt, und in diesem Falle kann aus der mehrfachen Schwellwertüberschreitung auf das Vorhandensein einer atmosphärischen Störung geschlossen werden.

Nach einer weiteren vorteilhaften Ausführungsform ist die Auswerteeinrichtung dazu ausgebildet, die Position eines detektierten Objekts anhand einer erfassten Relativgeschwindigkeit zwischen dem Objekt und der Erfassungsvorrichtung fortlaufend zu berechnen, wenn von der Auswerteeinrichtung detektiert wurde, dass das Objekt vorhanden ist und in einem Nahbereich der Erfassungsvorrichtung eintritt oder eingetreten ist, insbesondere wenn die Auswerteeinrichtung zusätzlich das Vorhandensein einer atmosphärischen Störung in dem Nahbereich detektiert hat.

Bei dieser Ausführungsform wird ein einmal detektiertes Objekt also von der Auswerteeinrichtung weiter berücksichtigt und seine Position anhand eines Modells der Bewegung des Objekts und der Erfassungsvorrichtung fortlaufend berechnet, insbesondere wenn das Objekt in ein Nahfeld der Erfassungsvorrichtung eintritt bzw. eingetreten ist. Bevorzugt detektiert die Auswerteeinrichtung, wenn das Objekt in das Nahfeld der Erfassungsvorrichtung eintritt, und überprüft im Falle des Erkennens, ob in dem Nahfeld eine atmosphärische Störung detektiert wurde. Insbesondere ist vorgesehen, dass die Berechnung der Objektposition anhand des Modells genau dann durchgeführt wird, wenn das Objekt in das Nahfeld eingetreten ist und eine atmosphärische Störung in dem Nahfeld detektiert wurde, oder genau dann, wenn durch die Auswerteeinrichtung festgestellt wird, dass das Objekt in das Nahfeld eingetreten ist und dass das Objekt in dem Nahfeld nicht mehr detektiert werden kann.

Nach einer weiteren vorteilhaften Ausführungsform ist die Sendeeinrichtung ausgebildet, um zur Unterscheidung eines Objekts von einer atmosphärischen Störung mehrere Sendestrahlungsbündel mit einer erhöhten Energie in einen Teilbereich des Erfassungsbereichs auszusenden, in dem sich das detektierte Objekt befindet.

Bei dieser Ausführungsform werden also mehrere Sendestrahlungsbündel, die eine gegenüber anderen Sendestrahlungsbündeln erhöhte Energie aufweisen, in einen Teilbereich des Erfassungsbereichs ausgesendet, in dem sich ein Objekt befindet. Durch das Senden solcher Sendestrahlungsbündel kann aufgrund der erhöhten Energie mit hoher Zuverlässigkeit festgestellt werden, ob in dem Teilbereich, in dem sich das Objekt befindet, eine atmosphärische Störung vorhanden ist.

Nach einer weiteren bevorzugten Ausführungsform ist die Sendeeinrichtung so ausgebildet und angeordnet, dass der Querschnitt von Sendestrahlungsbündeln im Fernfeld der Erfassungsvorrichtung länglich in Richtung einer Längsachse des Querschnitts geformt ist und/oder ist die Empfangseinrichtung so ausgebildet ist, dass der Querschnitt des Empfangsfelds entlang einer Längsachse des Querschnitts länglich geformt ist, insbesondere wobei die Längsachsen der Querschnitte der Sendestrahlungsbündel und des Empfangsfelds zumindest im Wesentlichen parallel zueinander ausgerichtet sind. Bei der Verwendung von Linsen wird unter Fernfeld das Feld verstanden, in dem ein im Wesentlichen scharfes Bild der zur Sendung des Sendestrahlungsbündels verwendeten Strahlungsquelle erzeugt werden kann.

Eine solche Ausbildung der Sendeeinrichtung erlaubt ein besonders günstiges Abtasten des Erfassungsbereichs durch die gesendeten Sendestrahlungsbündel.

Gemäß einer weiteren vorteilhaften Ausführungsform weist die Empfangseinrichtung mehrere entlang einer Längsachse angeordnete Sensorelemente auf. Durch solche Sensorelemente kann eine mehrlagige Erfassungsvorrichtung realisiert werden, bei der Sendestrahlungsbündel in unterschiedlichen und zumindest im Wesentlichen senkrecht zu der Scan-richtung übereinander angeordneten Ebenen ausgesendet werden und aus den verschiedenen Ebenen zurückgeworfene Strahlung der Sendestrahlungsbündel von verschiedenen Sensorelementen erfasst wird. Somit wird eine Auflösung des Erfassungsbereichs in mehreren Ebenen durch die mehreren Sensorelemente realisiert.

Nach einer bevorzugten Ausführungsform der Erfindung weist die Sendeeinrichtung zur Aussendung von Sendestrahlungsbündeln mehrere Strahlungsquellen und insbesondere genau zwei Strahlungsquellen auf. Bei einer solchen Ausführungsform kann die Betriebsdauer jeder einzelnen Strahlungsquelle reduziert werden, insbesondere wenn die Strahlungsquellen abwechselnd zur Aussendung von Sendstrahlungsquellen eingesetzt werden.

Bei mehreren vorhandenen Strahlungsquellen ist es bevorzugt, wenn Strahlungsquellen so ausgebildet und angeordnet sind, dass die Querschnitte von von unterschiedlichen Strahlungsquellen gesendeten Sendestrahlungsbündeln mit einer senkrecht auf der Erfassungsrichtung stehenden und sich zumindest bereichsweise im Fernfeld erstreckenden Fernfeldebene so ausgebildet sind, dass ihre geometrischen Schwerpunkte zumindest in einer Richtung quer zur Scan-Richtung voneinander beabstandet sind. Hierdurch kann eine zusätzliche Ortsauflösung der Erfassungsvorrichtung in der Richtung quer zur Scan-Richtung bewirkt werden. Insbesondere können hierzu die Mittelstrahlen von von unterschiedlichen Strahlungsquellen gesendeten Sendestrahlungsbündeln windschief zueinander sein.

Bei mehreren vorhandenen Sendestrahlungsquellen ist es ferner bevorzugt, wenn eine wie vorstehend beschriebene Dämpf- oder Ausblendeeinrichtung vorgesehen und so ausgebildet und angeordnet ist, dass sie den Anteil von aus dem Bereich einer ersten Überlappung zurückgeworfener Strahlung stärker reduziert als den Anteil von aus dem Bereich einer zweiten Überlappung zurückgeworfener Strahlung eines Sendestrahlungsbündels, wobei die erste Überlappung durch den Schnitt eines Sendestrahlungsbündels einer ersten Sendestrahlungsquelle mit der Nahfeldebene gebildet ist und die zweite Überlappung durch den Schnitt eines Sendestrahlungsbündels einer zweiten Sendestrahlungsquelle mit der Nahfeldebene gebildet ist.

Bei einer wie vorstehend beschriebenen Ausführung der Erfindung ist es besonders bevorzugt, wenn Sendestrahlungsbündel der ersten Strahlungsquelle mit dem ersten vorgegebenen Schwellwertverlauf verglichen und überprüft werden und Sendestrahlungsbündel der zweiten Sendestrahlungsquelle mit dem zweiten vorgegebenen Schwellwertverlauf verglichen und überprüft werden. Hierdurch wird erreicht, dass die Sendestrahlungsbündel, für die die Überhöhung der Empfindlichkeit im Nahfeld durch die Dämpf- oder Ausblendeeinrichtung stark reduziert ist, mit dem ersten Schwellwertverlauf verglichen werden, der innerhalb des mit dem Nahfeld korrespondierenden frühen Zeitintervalls einen höheren Verlauf annimmt. Somit wird ein irrtümliches Erfassen einer atmosphärischen Störung als Objekt besonders wirksam vermieden.

Die Aufgabe der Erfindung wird außerdem durch ein Verfahren mit den Merkmalen des Anspruchs 11 gelöst. Insbesondere kann das erfindungsgemäße Verfahren durch eine erfindungsgemäße optoelektronische Erfassungsvorrichtung wie vorstehend beschrieben durchgeführt werden. Die in Zusammenhang mit der optoelektronischen Vorrichtung vorstehend beschriebenen Erläuterungen, Beschreibungen und Vorteile gelten deshalb für das erfindungsgemäße Verfahren entsprechend.

Nachfolgend wird die vorliegende Erfindung rein beispielhaft anhand von vorteilhaften Ausführungsformen unter Bezugnahme auf die beigefügten Zeichnungen beschrieben. Es zeigen:
- Fig. 1: schematisch eine teilweise geschnittene Seitenansicht einer erfindungsgemäßen optoelektronischen Erfassungsvorrich- tung nach einer ersten Ausführungsform;
- Fig. 2: eine Draufsicht auf die optoelektronische Erfassungsvorrich- tung von Fig. 1;
- Fig. 3: eine Draufsicht auf die optoelektronische Erfassungsvorrich- tung von Fig. 1 und Fig. 2 mit einem Empfangsfeld, einem Sendestrahlungsbündel, einer Nahfeldebene, einer Überlap- pung und einer Femfeldebene;
- Fig. 4: einen Querschnitt von Empfangsfeld und Sendestrahlungs- bündel und die Überlappung von Fig. 3;
- Fig. 5: einen Frontalansicht auf die Sendelinse, die Ausblendeein- richtung und die Empfangslinse der optoelektronischen Erfas- sungsvorrichtung von Fig. 1-4;
- Fig. 6: einen ersten und einen zweiten erfindungsgemäßen Schwell- wertverlauf;
- Fig. 7: eine symbolische Darstellung einer erfindungsgemäßen Aus- wertung;
- Fig. 8: schematisch eine erfindungsgemäße optoelektronische Erfas- sungsvorrichtung nach einer zweiten Ausführungsform;
- Fig. 9: eine Draufsicht auf die optoelektronische Erfassungsvorrich- tung von Fig. 8 mit einem Empfangsfeld, zwei Sendestrah- lungsbündeln, einer Nahfeldebene, zwei Überlappungen und einer Fernfeldebene;
- Fig. 10: einen Querschnitt von Empfangsfeld und Sendestrahlungs- bündeln gemäß Fig. 9;
- Fig. 11: eine Frontalansicht auf die Sendelinsen, die Ausblendeein- richtung und die Empfangslinse der optoelektronischen Erfas- sungsvorrichtung von Fig. 8-10;
- Fig. 12: eine symbolische Darstellung einer erfindungsgemäßen Aus- wertung; und
- Fig. 13: Empfindlichkeitsverläufe von vier verschiedenen Kanälen ei- ner erfindungsgemäßen Erfassungsvorrichtung für den Nah- bereich.

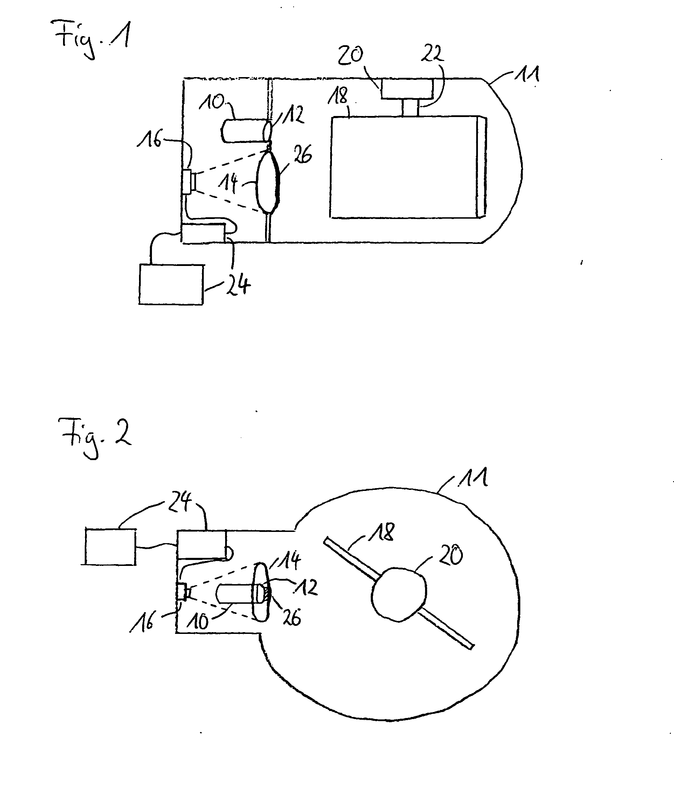

Die in Fig. 1 und Fig. 2 dargestellte optoelektronische Erfassungsvorrichtung umfasst ein Gehäuse 11 sowie eine Sendeeinrichtung mit einem Laser 10 und einer Sendelinse 12 zur Aussendung von Sendestrahlungsbündeln in den Erfassungsbereich der Erfassungsvorrichtung. Die Sendelinse 12 ist ausgebildet, um die von dem Laser 10 erzeugte optische Strahlung zu einem leicht divergenten Strahl zu formen.

Ferner ist eine Empfangseinrichtung mit einer Empfangslinse 14 und einer Sensoranordnung 16 vorgesehen, die aus dem Erfassungsbereich zurückgeworfene Strahlung von Sendestrahlungsbündeln während eines jeweiligen, auf das Aussenden des jeweiligen Sendestrahlungsbündels folgenden Messintervalls empfängt und zwei dem jeweiligen Sendestrahlungsbündel zugeordnete Empfangssignale erzeugt. Die Sensoranordnung 16 umfasst zur Erzeugung der Empfangssignale zwei übereinander angeordnete Sensorelemente, die für die von dem Laser 10 ausgesendete optische Strahlung empfindlich sind und jeweils ein Ausgangssignal liefern, welches im Wesentlichen proportional zu der von dem Sensorelement empfangenen optischen Strahlung eines Sendestrahlungsbündels ist. Durch das Vorsehen von zwei übereinander angeordneten Sensorelementen wird in dem vorliegenden Ausführungsbeispiel eine zusätzliche Auflösung der Erfassungsvorrichtung senkrecht zu der Scan-Richtung gewährleistet, sodass - wie eingangs bereits allgemein erläutert - eine mehrlagige Erfassungsvorrichtung realisiert wird. Generell kann die Sensoranordnung 16 jede beliebige Anzahl von Sensorelementen, also prinzipiell auch nur ein einziges Sensorelement, aufweisen. Das Empfangsfeld der Empfangseinrichtung ist durch die Empfangslinse 14 leicht divergent geformt.

Eine Ablenkeinrichtung der Erfassungsvorrichtung umfasst einen Spiegel 18, der durch einen Motor 20 um eine Drehachse geschwenkt werden kann und Sendestrahlungsbündel von der Sendeeinrichtung in den Erfassungsbereich und aus dem Erfassungsbereich zurückgeworfene Strahlung der Sendestrahlungsbündel auf die Empfangseinrichtung lenkt.

Durch das Schwenken des Spiegels 18 werden die Sendestrahlungsbündel der Sendeeinrichtung und das Empfangsfeld der Empfangseinrichtung synchron bewegt. Empfangslinse 14 und Sendelinse 12 sind so angeordnet, dass durch die Sendelinse 12 geformte und über den Spiegel 18 in den Erfassungsbereich abgelenkte Strahlung des Lasers 10, die aus dem Erfassungsbereich zurückgeworfen wird, über den Spiegel 18 so auf die Empfangslinse 14 gelenkt wird, dass die Empfangslinse 14 die Strahlung zumindest teilweise sammelt und auf die Sensoranordnung 16 lenkt.

Der Spiegel 18 wird so geschwenkt, dass der Erfassungsbereich durch die Erfassungsvorrichtung scan-weise, also durch zeitlich aufeinander folgende Scans, überwacht wird. Innerhalb jedes Scans werden die Sendestrahlungsbündel und das Empfangsfeld durch den Spiegel 18 von einer Anfangswinkelstellung des Spiegels 18 ausgehend mit zunehmender Zeit zunehmend in eine vorgegebene Scan-Richtung abgelenkt, bis eine Endwinkelstellung des Spiegels 18 erreicht ist, wonach ein nächster Scan beginnt.

Die optoelektronische Erfassungsvorrichtung weist außerdem eine Auswerteeinrichtung 24 auf, die mit der Sensoranordnung 16 verbunden ist und die von der Empfangseinrichtung erzeugten Empfangssignale empfängt und auswertet. Die Auswerteeinrichtung 24 ist dazu ausgebildet, um ein Empfangssignal eines Sendestrahlungsbündels mit einem von zwei vorgegebenen und nachfolgend noch genauer beschriebenen Schwellwertverläufen zu vergleichen und auf ein Überschreiten des jeweiligen Schwellwertverlaufs zu überprüfen, wobei die Auswerteeinrichtung 24 von den empfangenen Empfangssignalen eines Sendestrahlungsbündels zu den als nächstes empfangenen Empfangssignalen eines anderen Sendestrahlungsbündels zwischen dem ersten und dem zweiten Schwellwertverlauf abwechselt. Prinzipiell ist erfindungsgemäß aber auch jede andere regelmäßige Zuordnung und Abfolge der zum Vergleich und Überprüfen von der Auswerteeinrichtung 24 herangezogenen Schwellwertverläufe denkbar.

Zum Vergleichen und Überprüfen der Empfangssignale mit den zwei verschiedenen vorgegebenen Schwellwertverläufen ist in der Auswerteeinrichtung 24 ein in Fig. 1 und 2 nicht weiter dargestellter Schwellwertentscheider vorgesehen, der ein an seinem Eingang anliegendes Signal mit einer Schwelle vergleicht und der bei Überschreiten der Schwelle an einem Ausgang ein entsprechendes Signal oder Signalmerkmal liefert.

Ein durch die Auswerteeinrichtung 24 erkanntes Überschreiten eines Schwellwertverlaufs durch ein Empfangssignal führt zur Erzeugung eines entsprechenden Messwerts, wobei die Auswerteeinrichtung wie eingangs beschrieben die Entfernung des im Erfassungsbereich befindlichen Objekts bzw. der atmosphärischen Störung von der Erfassungsvorrichtung bestimmt und ein Abbild der Umgebung der Erfassungsvorrichtung erzeugt, welches gegebenenfalls in dem Überwachungsbereich befindliche Objekte bzw. atmosphärische Störungen enthält.

Bei dem vorliegenden Ausführungsbeispiel einer erfindungsgemäßen Erfassungsvorrichtung handelt es sich um eine mehrzielfähige Erfassungsvorrichtung.

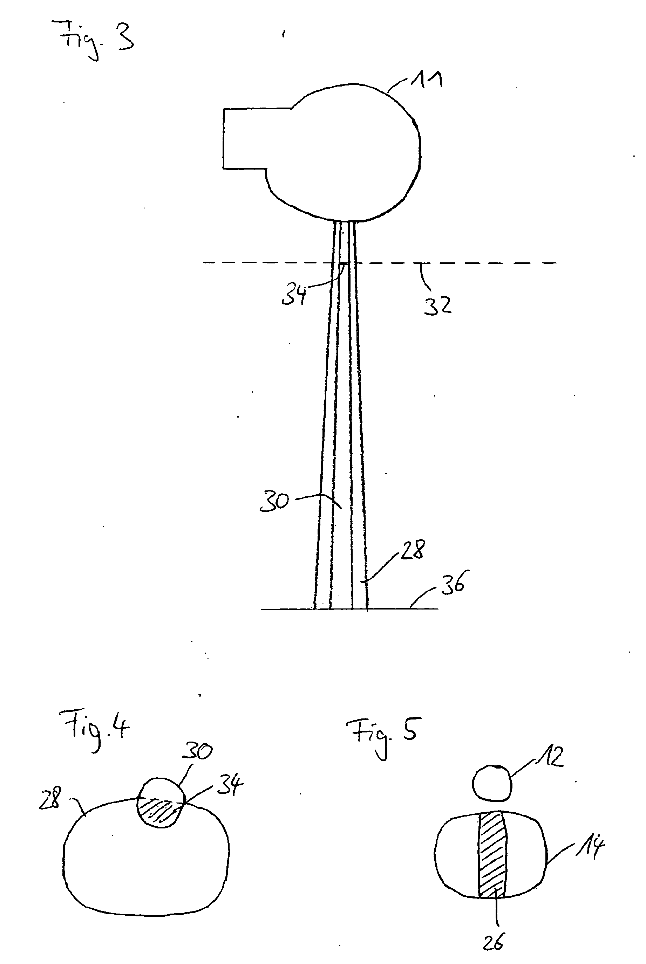

Die Empfangslinse 14 weist eine Ausblendeeinrichtung 26 auf, die nachfolgend in Bezug auf Fig. 5 noch näher erläutert wird.

In Fig. 3 sind das Gehäuse 11 der optoelektronischen Erfassungsvorrichtung sowie das Empfangsfeld 28 der Empfangseinrichtung und ein Sendestrahlungsbündel 30 in Draufsicht gezeigt. Das Empfangsfeld 28 der Erfassungsvorrichtung ist das Feld, aus dem aufgrund der Ausgestaltung und Anordnung der Empfangslinse 14 und der Sensoranordnung 16 der Empfangseinrichtung sowie des Spiegels 18 in Abwesenheit der Ausblendeeinrichtung 26 Strahlung empfangbar ist. Der Schnitt des Sendestrahlungsbündels 30 mit einer das Nahfeld der Erfassungsvorrichtung durchtretenden Nahfeldebene 32 und der Schnitt des Empfangsfelds 28 mit der Nahfeldebene 32 weisen eine Überlappung 34 auf. Ferner ist eine Fernfeldebene 36 dargestellt, die das Fernfeld der Erfassungsvorrichtung durchtritt.

Fig. 4 zeigt den Querschnitt des Empfangsfelds 28 und des Sendestrahlungsbündels 30 mit der Nahfeldebene aus Fig. 3 sowie die Überlappung 34 beider Querschnitte. Fig. 4 zeigt, dass das Sendestrahlungsbündel 30 in der Nahfeldebene 32 bereichsweise in das Empfangsfeld 28 eintaucht, um die Überlappung 34 zu bilden.

Fig. 5 zeigt eine Frontalansicht der Sendelinse 12 und der Empfangslinse 14 der Erfassungsvorrichtung. Die Ausblendeeinrichtung 26 ist als eine auf die Empfangslinse 14 aufgebrachte Schwärzung ausgebildet und so angeordnet, dass sie lediglich einen unterhalb der Sendelinse 12 gelegenen Bereich der Empfangslinse 14 abdeckt. Dieser Bereich stellt den Bereich der Empfangslinse dar, in dem die aus dem Bereich der Überlappung 34 zurückgeworfene Strahlung eines Sendestrahlungsbündels eine im Vergleich zu der übrigen Empfangslinse 14 besonders hohe Intensität aufweist. Aufgrund der dargestellten Anordnung reduziert die Ausblendeeinrichtung 26 die Empfindlichkeit der Empfangseinrichtung für aus dem Bereich der Überlappung 34 zurückgeworfene Strahlung eines Sendestrahlungsbündels, ohne die Empfindlichkeit der Empfangseinrichtung für das Fernfeld unnötig einzuschränken.

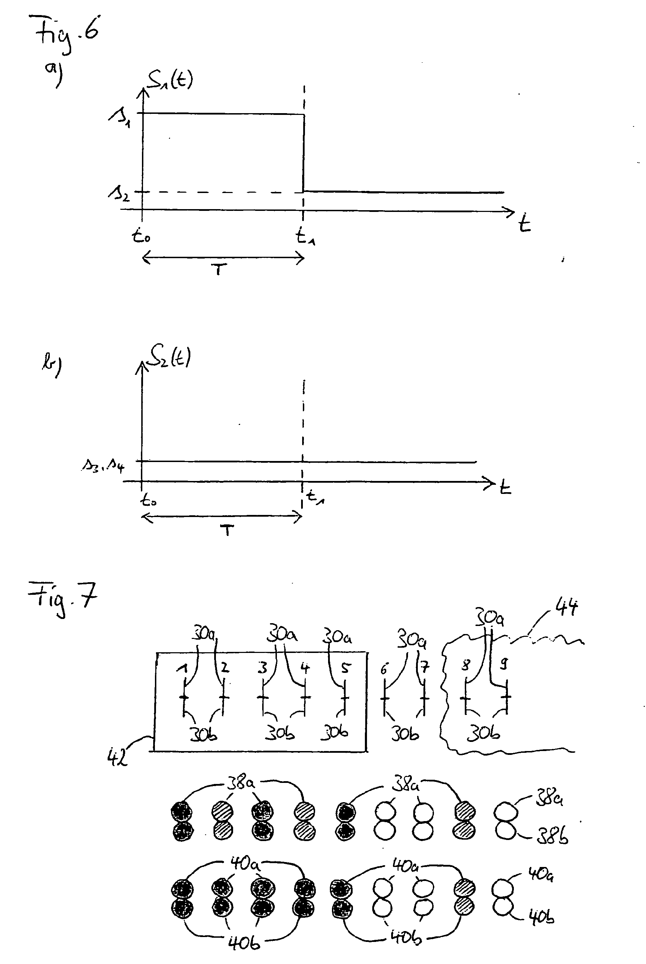

Fig. 6a zeigt einen ersten und Fig. 6b einen zweiten vorgegebenen Schwellwertverlauf S₁(t), S₂(t) der Auswerteeinrichtung der vorstehend beschriebenen Ausführungsform. Die Zeitachsen t des ersten und des zweiten Schwellwertverlaufs S₁(t), S₂(t) sind relativ zu dem Zeitpunkt t₀ des Beginns des Messintervalls des jeweiligen Sendestrahlungsbündels, dessen Empfangssignal mit dem ersten bzw. zweiten Schwellwertverlauf S₁(t), S₂(t) verglichen wird, definiert.

Beide Schwellwertverläufe S₁(t), S₂(t) beginnen zum Zeitpunkt to, also zum Beginn des Messintervalls des jeweiligen Sendestrahlungsbündels, mit einem Wert größer Null. Die Schwellwertverläufe S₁(t), S₂(t) weisen ein sich von t₀ bis t₁ erstreckendes frühes Zeitintervall auf, das einen Zeitbereich der Länge T darstellt. Innerhalb des frühen Zeitintervalls nimmt der erste Schwellwertverlauf einen ersten konstanten Wert s₁ und der zweite Schwellwertverlauf S₂(t) einen dritten konstanten Wert s₃ an, wobei s₁ größer ist als s₃ und S₁(t) somit innerhalb des gesamten frühen Zeitintervalls, das einen Zeitbereich der Länge T darstellt, oberhalb von S₂(t) verläuft.

Das frühe Zeitintervall ist hierbei so gewählt, dass es dem Nahfeld der Erfassungsvorrichtung entspricht, dass T also der Zeit entspricht, innerhalb der sich ein ausgesendetes Sendestrahlungsbündel von der Sendeeinrichtung bis zu einem zu erwartenden, in dem Nahfeld befindlichen Objekt und durch das Objekt zurückgeworfene Strahlung desselben Sendestrahlungsbündels sich zurück bis zu der Erfassungsvorrichtung ausbreitet. Der erste konstante Wert s₁ des ersten Schwellwertverlaufs in dem frühen Zeitintervall ist so gewählt, dass ein in dem Nahfeld befindliches, zu erwartendes Objekt in der Regel zu einem Empfangssignal führt, welches den ersten konstanten Wert s₁ innerhalb des frühen Zeitintervalls überschreitet und eine zu erwartende, in dem Nahfeld befindliche atmosphärische Störung in der Regel zu einem Empfangssignal führt, welches den ersten konstanten Wert s₁ innerhalb des frühen Zeitintervalls nicht überschreitet. Der dritte konstante Wert s₃ ist so gewählt, dass eine in dem Nahfeld befindliche atmosphärische Störung in der Regel zu einem Empfangssignal führt, welches den dritten konstanten Wert s₃ innerhalb des frühen Zeitintervalls überschreitet.

In dem auf das frühe Zeitintervall folgenden Zeitbereich, der mit einem Bereich des Erfassungsbereichs korrespondiert, der weiter entfernt ist als das Nahfeld, nimmt der erste Schwellwertverlauf S₁(t) einen zweiten konstanten Wert s₂ an und nimmt der zweite Schwellwertverlauf S₂(t) einen vierten konstanten Wert s₄ an. Der zweite konstante Wert s₂ und der vierte konstante Wert s₄ sind in dem vorliegenden Ausführungsbeispiel identisch und so gewählt, dass ein zu erwartendes, in dem entfernteren Bereich befindliches Objekt in der Regel zu einem Anstieg des Empfangssignals führt, welcher eine Überschreitung des zweiten bzw. vierten Konstantwerts s₂, s₄ zur Folge hat, während eine in dem entfernteren Bereich befindliche Störung in der Regel unterhalb des Konstantwerts s₂, s₄ bleibt, wobei dies auch für das zu erwartende Rauschen der Empfangseinrichtung gilt.

Der erste und der zweite Schwellwertverlauf S₁(t), S₂(t) nehmen den zweiten bzw. vierten Konstantwert s₂, s₄ bis zu ihrem Ende an, welches mit dem Ende des Messintervalls des jeweiligen Sendestrahlungsbündels zusammenfällt. Im vorliegenden Ausführungsbeispiel erstreckt sich das Messintervall jedes Sendestrahlungsbündels von dem Beginn der Aussendung des Sendestrahlungsbündels bis zur zeitlich darauf folgenden Aussendung eines nächsten Sendestrahlungsbündels, wobei prinzipiell aber auch längere oder kürzere Messintervalle denkbar sind.

Der Vergleich und das Überprüfen auf eine Überschreitung der vorgegebenen Schwellwertverläufe S₁(t), S₂(t) sind in der Auswerteeinrichtung durch einen wie vorstehend in Bezug auf Fig. 1 und 2 bereits eingeführten Schwellwertentscheider realisiert, dessen Schwelle die Konstantwerte s₁-s₄ der beiden Schwellwertverläufe S₁(t), S₂(t) in einer dem jeweiligen Schwellwertverlauf S₁(t), S₂(t) entsprechenden zeitlichen Abfolge annimmt. Generell sind aber auch andere Implementierungen beispielsweise mit mehreren zu- und abschaltbare Schwellwertentscheidern mit konstantem Schwellwert oder digitalen Prozessoren denkbar.

Fig. 7 zeigt eine symbolische Darstellung einer Auswertung durch die Auswerteeinrichtung der vorstehend beschriebenen Ausführungsform.

Dargestellt ist die Auswertung der Empfangssignale für das Nahfeld der Erfassungsvorrichtung. Symbolisch sind neun zeitlich aufeinander folgend gesendete Sendestrahlungsbündel 30 eines Scans dargestellt und mit 1-9 nummeriert. Die horizontal beabstandete Anordnung der Sendestrahlungsbündel 30 entspricht der zunehmenden Ablenkung der Sendestrahlungsbündel 30 in Scan-Richtung und die dadurch bewirkte Auflösung der Erfassungsvorrichtung in der Scan-Richtung. Die Sendestrahlungsbündel 30 sind jeweils in einen oberen Bereich 30a und einen unteren Bereich 30b aufgeteilt, wobei der obere Bereich 30a Strahlung des Sendestrahlungsbündels 30 symbolisiert, die von dem oberen Sensorelement der Sensoranordnung der Empfangseinrichtung empfangen wird und der untere Bereich 30b Strahlung des Sendestrahlungsbündels 30 symbolisiert, die von dem unteren Sensorelement empfangen wird. Zusätzlich zu den Sendestrahlungsbündeln 30 sind ein im Bereich eines Teils der Sendestrahlungsbündel 30 vorhandenes Objekt 38 und eine im Bereich der Sendestrahlungsbündel 30 vorhandene atmosphärische Störung dargestellt.

Unterhalb jedes Sendestrahlungsbündels 30 sind die von der Auswerteeinrichtung durch Vergleich der Empfangssignale des jeweiligen Sendestrahlungsbündels 30 mit dem ersten bzw. zweiten Schwellwertverlauf gewonnenen Messwerte 38 dargestellt. Ein oberer Messwert 38a stellt jeweils den zu dem durch das obere Sensorelement erzeugten Empfangssignal gehörenden Messwert dar und ein unterer Messwert 38b stellt jeweils den zu dem durch das obere Sensorelement erzeugten Empfangssignal gehörenden Messwert dar.

In dem dargestellten Beispiel einer Auswertung werden die Empfangssignale der Sendestrahlungsbündel 30 mit ungeradzahliger Nummer 1, 3, 5, 7 und 9 gemäß der abwechselnden Reihenfolge jeweils mit dem ersten Schwellwertverlauf verglichen und überprüft und die Empfangssignale der Sendestrahlungsbündel 30 mit geradzahliger Nummer 2, 4, 6, 8 jeweils mit dem zweiten Schwellwertverlauf verglichen und überprüft.

Ein als ausgefüllter Kreis dargestellter Messwert 38 bedeutet, dass bei dem Vergleichen und Überprüfen des entsprechenden Empfangssignals ein Überschreiten des ersten Schwellwertverlaufs während des frühen Zeitintervalls erkannt wurde. Ein als schraffierter Kreis dargestellter Messwert 38 bedeutet, dass bei dem Überprüfen des entsprechenden Empfangssignals ein Überschreiten des zweiten Schwellwertverlaufs erkannt wurde. Ein als leerer Kreis dargestellter Messwert 38 bedeutet, dass bei dem Überprüfen des entsprechenden Empfangssignals kein Überschreiten des jeweils überprüften Schwellwertverlaufs erkannt wurde.

Dementsprechend ist ersichtlich, dass in der beispielhaften Auswertung von Fig. 7 die Empfangssignale der Sendestrahlungsbündel 30 mit Nummer 1, 3 und 5 den ersten Schwellwertverlauf überschritten haben und die Empfangssignale der Sendestrahlungsbündel 30 mit Nummer 2, 4 und 8 den zweiten Schwellwertverlauf überschritten haben.

Unterhalb der Messwerte 38 sind in Fig. 7 die jeweils zugehörigen von der Auswerteeinrichtung aus den Messwerten 38 unter Berücksichtigung von zwischen den Sendestrahlungsbündeln 30 bestehenden Nachbarschaftsbeziehungen abgeleiteten Interpretationswerte 40 dargestellt. Die oberen Interpretationswerte 40a korrespondieren jeweils mit den oberen Messwerten 38a und die unteren Interpretationswerte 40b korrespondieren jeweils mit den unteren Messwerten 38b. Ein als ausgefüllter Kreis dargestellter Interpretationswert 40 symbolisiert eine Interpretation des zugehörigen Messwerts durch die Auswerteeinrichtung als Objekt, ein als schraffierter Kreis dargestellter Interpretationswert 40 symbolisiert eine Interpretation des zugehörigen Messwerts 38 als atmosphärische Störung und ein als leerer Kreis dargestellter Interpretationswert 40 symbolisiert eine Interpretation des zugehörigen Messwerts 38 als freies Nahfeld.

Bei der Interpretation der Messwerte 38 durch die Auswerteeinrichtung werden Nachbarschaftsbeziehungen zwischen den zu den Messwerten gehörigen Sendestrahlungsbündeln berücksichtigt. Im vorliegenden Ausführungsbeispiel der Erfindung wird ein Messwert 38, der ein erkanntes Überschreiten des zweiten Schwellwertverlaufs innerhalb des frühen Zeitintervalls durch das zugehörige Empfangssignal anzeigt, dann als Messung eines Objekts interpretiert, wenn zumindest ein Messwert 38 eines Empfangssignal eines direkt benachbarten Sendestrahlungsbündels 30 ein erkanntes Überschreiten des ersten Schwellwertverlaufs durch das zu ihm gehörige Empfangssignal anzeigt. Direkt benachbart zu einem Sendestrahlungsbündel 30 ist ein anderes Sendestrahlungsbündel 30 gemäß dem vorliegenden Ausführungsbeispiel genau dann, wenn es als letztes Sendestrahlungsbündel 30 vor dem einen Sendestrahlungsbündel 30 oder als erstes Sendestrahlungsbündel 30 nach dem einen Sendestrahlungsbündel 30 ausgesendet wurde, also seine Nummer in der Darstellung von Fig. 7 lediglich um eins von der Nummer des einen Sendestrahlungsbündels 30 abweicht.

Gemäß dieser Interpretationsvorschrift werden die zu den Sendestrahlungsbündeln 30 mit Nummer 2 und 4 gehörigen Messwerte 38 aufgrund der benachbarten Messwerte 38 von der Auswerteeinrichtung als Objekte im Nahfeld interpretiert. Hingegen werden die Messwerte 38 des Sendestrahlungsbündels 30 mit Nummer 8 als atmosphärische Störung im Nahfeld interpretiert.

Somit werden durch die Interpretation der Messwerte 38 durch die Auswerteeinrichtung unter Berücksichtigung der Nachbarschaftsbeziehungen sowohl das Objekt 42 als auch die atmosphärische Störung 44 korrekt erkannt.

Nicht in Fig. 7 dargestellt ist, dass die Auswerteeinrichtung auch die sich aus dem Überprüfen der Empfangssignale ergebenden Entfernungswerte verarbeitet und somit nicht nur das Vorhandensein des Objekts 42 und der atmosphärische Störung 44 erkennt, sondern auch ein die Entfernung und Kontur des Objekts 42 enthaltendes mehrdimensionales Abbild des Erfassungsbereichs erzeugt.

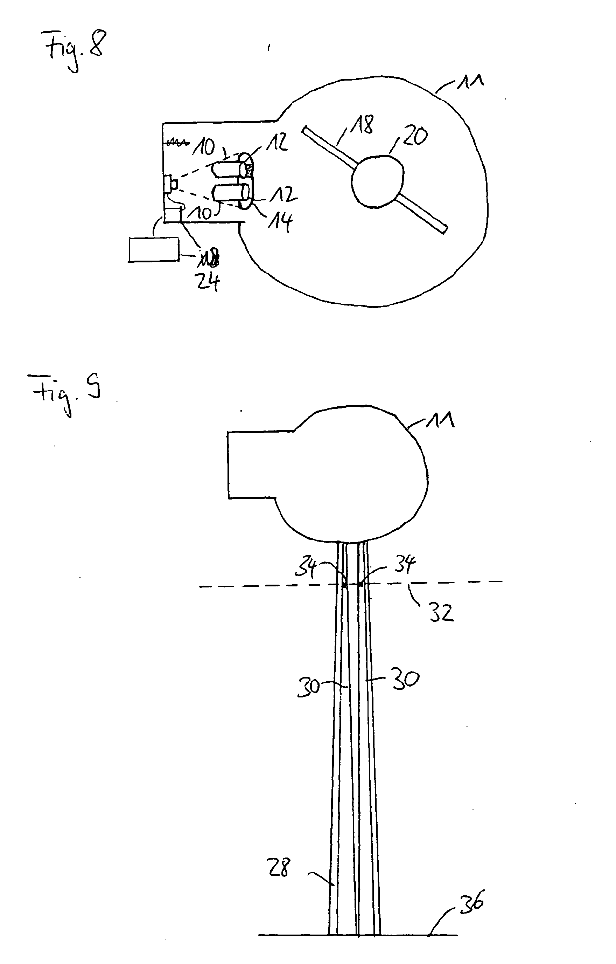

Fig. 8 zeigt eine Draufsicht auf eine erfindungsgemäße optoelektronische Erfassungsvorrichtung nach einer zweiten Ausführungsform.

Diese zweite Ausführungsform ist im Wesentlichen mit der vorstehend beschriebenen ersten Ausführungsform identisch. Sie unterscheidet sich darin von der ersten Ausführungsform, dass zwei Laser 10 und zwei Sendelinsen 12 vorgesehen sind und die Sensoranordnung 16 der Empfangseinrichtung vier übereinander angeordnete Sensorelemente aufweist, die Erfassungsvorrichtung also dementsprechend vier vertikale Ebenen hat, und dass die Anordnung der Ausblendeeinrichtung 26 und die Konfiguration der Auswerteeinrichtung 24 auf die Ausführung mit zwei Lasern 10 abgestimmt sind.

Fig. 9 zeigt die optoelektronische Sensoranordnung der zweiten Ausführungsform einschließlich des Empfangsfeldes 28 und zwei jeweils von einem der Laser gesendete Sendestrahlungsbündel 30. Der Schnitt jedes der Sendestrahlungsbündel 30 weist mit einer Nahfeldebene 32 jeweils eine Überlappung 34 auf. In der dargestellten Ausführungsform sind die Laser 10 und die Sendelinsen 12 so ausgerichtet, dass bei fester Winkelstellung des Spiegels 18 Mittelstrahlen von von den beiden Lasern 10 gesendeten Sendestrahlungsbündeln 30 windschief zueinander sind und die geometrischen Schwerpunkte der Querschnitte zweier solcher Sendestrahlungsbündel 30 mit einer Fernfeldebene 36 in der Richtung quer zur Erfassungsrichtung voneinander beabstandet sind. Somit wird eine zusätzliche Auflösung quer zur Erfassungsrichtung gewährleistet. Die Sensorelemente der Sensoranordnung 16 sind so angeordnet, dass die oberen zwei Sensorelemente zurückgeworfene Strahlung von Sendestrahlungsbündeln 30 von einem der Laser 10 erfassen und die unteren zwei Sensorelemente zurückgeworfene Strahlung von Sendestrahlungsbündeln 30 des anderen Lasers 10 erfassen.

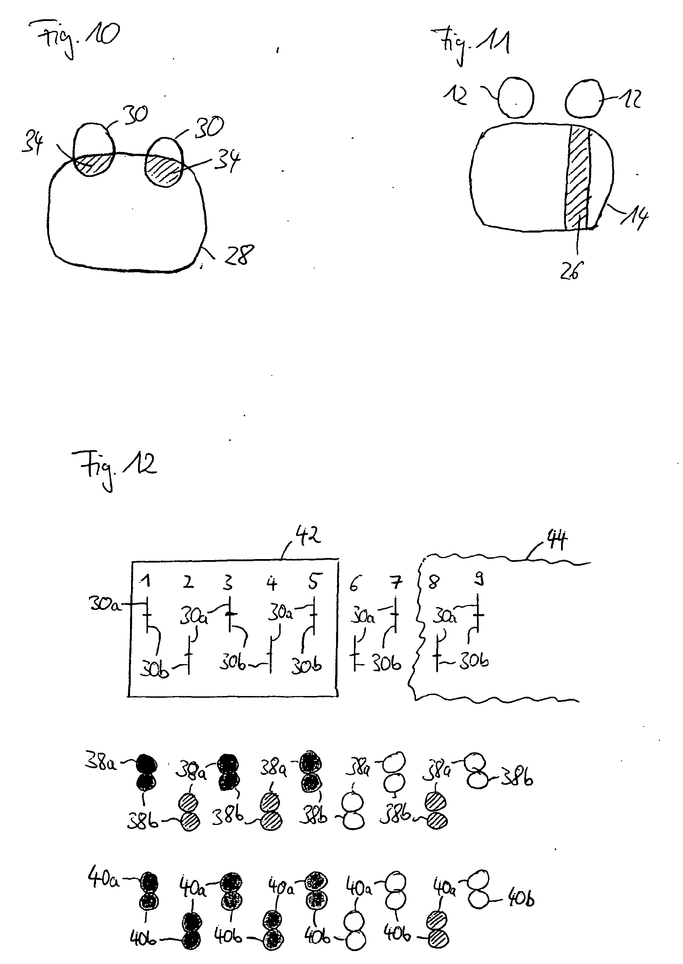

Fig. 10 zeigt den Querschnitt des Empfangsfelds 28 und der Sendestrahlungsbündel 30 mit der Nahfeldebene aus Fig. 9 sowie die Überlappungen 34 der Querschnitte der Sendestrahlungsbündel 30 mit dem Querschnitt des Empfangsfelds 28. Fig. 10 zeigt, dass die Sendestrahlungsbündel 30 in der Nahfeldebene bereichsweise in das Empfangsfeld 28 eintauchen, um die Überlappungen 34 zu bilden. Fig. 10 zeigt auch, dass ein Sendestrahlungsbündel 30 aufgrund der windschiefen Anordnung der Sendestrahlungsbündel 30 zueinander weiter innerhalb des Empfangsfelds 28 liegt.

Fig. 11 zeigt eine Frontalansicht der Empfangslinse 14 und der Sendelinsen 12 der Erfassungsvorrichtung von Fig. 8-10. Eine Ausblendeeinrichtung 26 ist auf der Empfangslinse 14 lokal unterhalb einer der Sendelinsen 12 als Schwärzung aufgebracht. Dadurch wird die aus dem Nahfeld zurückgeworfene Strahlung von denjenigen Sendestrahlungsbündeln stärker abgeschattet, die von dem Laser gesendet wurden, unterhalb dessen die Schwärzung aufgebracht ist. Die von dem anderen Laser gesendeten Sendestrahlungsbündel werden hingegen bei einem Zurückwerfen durch ein Objekt aus dem Nahfeld weniger stark abgeschattet.

Fig. 12 zeigt eine symbolische Darstellung einer Auswertung, wobei wie in Fig. 7 gezeigt ein Objekt 42 und eine atmosphärische Störung 44 in dem Nahfeld der Erfassungsvorrichtung vorhanden ist. Die verwendeten Symbole haben jeweils die den gleichen Symbolen von Fig. 7 entsprechende Bedeutung.

Weiter sind neun mit Zahlen 1-9 nummerierte Sendestrahlungsbündel 30 gezeigt. Im vorliegenden Ausführungsbeispiel wird bei dem zeitlich aufeinander folgenden Aussenden der Sendestrahlungsbündel 30 zwischen den zwei Lasern abgewechselt. Aufgrund der windschiefen Anordnung der Mittelstrahlen der Sendestrahlungsbündel 30 erfassen somit die von einem Laser gesendeten Sendestrahlungsbündel 30, in dem vorliegenden Beispiel die Sendestrahlungsbündel 30 mit ungeradzahligen Nummern 1, 3, 5, 7 und 9, eine weiter oben liegende Ebene und die von dem anderen Laser gesendeten, geradzahligen Sendestrahlungsbündel 30 eine weiter unten liegende Ebene des Erfassungsbereichs.

Die Auswerteeinrichtung ist im vorliegenden Ausführungsbeispiel so konfiguriert, dass die Empfangssignale der Sendestrahlungsbündel 30, die von dem Laser stammen, unterhalb dessen die Ausblerideeinrichtung angeordnet ist, mit dem ersten Schwellwertverlauf verglichen werden und die übrigen Empfangssignale der übrigen Sendestrahlungsbündel mit dem zweiten Schwellwertverlauf verglichen werden.

Eine Nachbarschaftsbeziehung ist im vorliegenden Ausführungsbeispiel so definiert, dass sie zwischen einem Sendestrahlungsbündel 30 und einem anderen Sendestrahlungsbündel 30 genau dann besteht, wenn das andere Sendestrahlungsbündel 30 als letztes Sendestrahlungsbündel 30 vor dem einen Sendestrahlungsbündel 30 oder als erstes Sendestrahlungsbündel 30 nach dem einen Sendestrahlungsbündel 30 ausgesendet wurde, also seine Nummer in der Darstellung von Fig. 12 lediglich um eins von der Nummer des einen Sendestrahlungsbündels 30 abweicht.

Dementsprechend ergeben sich die in Fig. 12 gezeigten und zu den Messwerten 38 gehörigen Interpretationswerte 40, die das im Nahfeld vorhandene Objekt und die atmosphärische Störung wiedergeben.

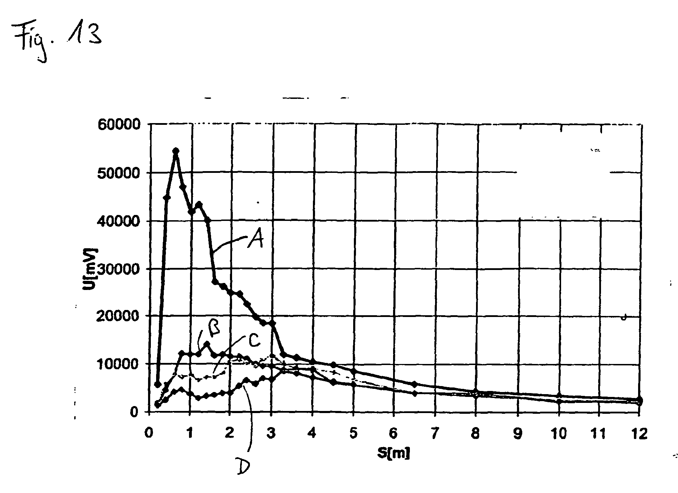

Fig. 13 zeigt die beispielhaften Empfindlichkeitsverläufe von vier durch verschiedene Sensorelemente gebildeten Kanälen A, B, C und D einer erfindungsgemäßen Erfassungsvorrichtung für den Nahbereich. Die Empfindlichkeit ist durch die Ausgangsspannung U[mV] des jeweiligen Sensorelements bei Zurückwerfen von Strahlung eines entsprechenden Sendestrahlungsbündels durch ein in der entsprechenden Entfernung S[m] befindlichen Normobjekts repräsentiert. Insbesondere im Ultranahbereich zwischen 0 und 4m Entfernung S[m] weisen die Kanäle A-D stark unterschiedliche Empfindlichkeiten auf. Kanal D ist im Nahbereich relativ unempfindlich, sodass eine Detektion, d.h. eine Schwellwertüberschreitung im Nahbereich, durch Kanal D mit hoher Wahrscheinlichkeit auf ein Objekt und nur mit sehr geringer Wahrscheinlichkeit auf eine atmosphärische Störung im Nahbereich hindeutet. Der nächstempfindlichere Kanal C detektiert hingegen sowohl Objekte als auch atmosphärische Störungen hoher Stärke. Der nächstempfindlichere Kanal B detektiert sowohl Objekte im Nahbereich als auch atmosphärische Störungen hoher und mittlerer Stärke. Der empfindlichste Kanal A detektiert auch schon atmosphärische Störungen geringer Stärke.

Das Wissen über den am wenigsten empfindlichen Kanal, der im Nahbereich noch eine Detektion liefert, lässt somit auf die Stärke einer im Nahbereich vorhandenen atmosphärischen Störung, oder, falls der unempfindlichste Kanal D eine Detektion liefert, auf das Vorhandensein eines Objekts im Nahbereich schließen. Aus den aktuellen atmosphärischen Umweltbedingungen kann wiederum auf die aktuelle Reichweite der optoelektronischen Erfassungsvorrichtung geschlossen werden.

### Bezugszeichenliste

- 10: Laser
- 11: Gehäuse
- 12: Sendelinse
- 14: Empfangslinse
- 16: Sensoranordnung
- 18: Spiegel
- 20: Motor
- 22: Drehachse
- 24: Auswerteeinrichtung
- 26: Ausblendeeinrichtung
- 28: Empfangsfeld
- 30: Sendestrahlungsbündel
- 32: Nahfeldebene
- 34: Überlappung
- 36: Fernfeldebene
- t: Zeitachse
- S₁(t): erster Schwellwertverlauf
- S₂(t): zweiter Schwellwertverlauf
- T: Zeitbereich
- to, t₁: Zeitpunkt
- s₁, s₂: Konstantwert
- s₃, s₄: Konstantwert
- 38: Messwert
- 40: Interpretationswert
- 42: Objekt
- 44: atmosphärische Störung

## Patentansprüche

1. Optoelektronische Erfassungsvorrichtung, insbesondere Laserscanner, zur Unterscheidung zwischen Objekten (42) einerseits und atmosphärischen Störungen (44) andererseits, mit einer Sendeeinrichtung (10, 12) zur Aussendung von mehreren Sendestrahlungsbündeln (30) mit elektromagnetischer Strahlung in einen Erfassungsbereich der Erfassungsvorrichtung,
einer Empfangseinrichtung (14, 16) mit einem Empfangsfeld (28), aus dem Strahlung empfangbar ist, zum Empfangen von aus dem Erfassungsbereich zurückgeworfener Strahlung von Sendestrahlungsbündeln (30) während eines jeweiligen, auf das Aussenden des jeweiligen Sendestrahlungsbündels (30) folgenden Messintervalls zum Erzeugen wenigstens eines dem jeweiligen Sendestrahlungsbündel (30) zugeordneten Empfangssignals,
einer Auswerteeinrichtung (24) zum Auswerten der Empfangssignale und
einer Ablenkeinrichtung (18, 20, 22), mit der die Sendestrahlungsbündel (30) von der Sendeeinrichtung (10, 12) in den Erfassungsbereich und aus dem Erfassungsbereich zurückgeworfene Strahlung der Sendestrahlungsbündel (30) auf die Empfangseinrichtung (14, 16) dergestalt lenkbar sind, dass gesendete Sendestrahlungsbündel (30) mit zunehmender Zeit zunehmend in eine vorgegebene Scan-Richtung abgelenkt werden,
wobei die Auswerteeinrichtung (24) dazu ausgebildet ist,
ein Empfangssignal eines Sendestrahlungsbündels (30) während des Messintervalls des Sendestrahlungsbündels (30) mit wenigstens einem von mehreren vorgegebenen Schwellwertverläufen (S₁(t), S₂(t)) zu vergleichen und auf ein Überschreiten des jeweiligen Schwellwertverlaufs (S₁(t), S₂(t)) zu überprüfen,
wobei ein erster vorgegebener Schwellwertverlauf (S₁(t)) ein erstes, bezogen auf das jeweilige Messintervall frühes, Zeitintervall aufweist, und
wobei ein zweiter vorgegebener und von dem ersten Schwellwertverlauf (S₁(t)) verschiedener Schwellwertverlauf (S₂(t)) ein zweites, bezogen auf das jeweilige Messintervall frühes, Zeitintervall aufweist, wobei über einen relativ zu dem jeweiligen Messintervall definierten Zeitbereich des ersten und zweiten Zeitintervalls hinweg der erste Schwellwertverlauf (S₁(t)) über dem zweiten Schwellwertverlauf (S₂(t)) liegt,
wobei die Auswerteeinrichtung (24) ausgebildet ist, um festzustellen, ob eine Überprüfung eines Empfangssignals eines Sendestrahlungsbündels (30), welches in einer vorgegebenen örtlichen Nachbarschaftsbeziehung zu einem anderen Sendestrahlungsbündel (30) steht, zu dem ein Empfangssignal gehört, bei dessen Überprüfung ein Überschreiten des zweiten Schwellwertverlaufs (S₂(t)) innerhalb des zweiten Zeitintervalls erkannt wurde, ein Überschreiten des ersten Schwellwertverlaufs (S₁(t)) innerhalb des ersten Zeitintervalls ergeben hat.

2. Erfassungsvorrichtung nach Anspruch 1,
**dadurch gekennzeichnet, dass**
die vorgegebene örtliche Nachbarschaftsbeziehung so definiert ist, dass sie nur zwischen Sendestrahlungsbündeln (30) besteht, die bis in eine vorgegebene Entfernung von der Ablenkeinrichtung (18, 20, 22) auf demselben erwarteten Objekt (42) liegen.

3. Erfassungsvorrichtung nach einem der vorstehenden Ansprüche,
**dadurch gekennzeichnet, dass**
die Auswerteeinrichtung (24) dazu ausgebildet ist, Empfangssignale zeitlich aufeinanderfolgender Sendestrahlungsbündel (30) nach einer vorgegebenen Abfolge, insbesondere von Sendestrahlungsbündel (30) zu Sendestrahlungsbündel (30) abwechselnd, mit dem ersten Schwellwertverlauf (S₁(t)) oder mit dem zweiten Schwellwertverlauf (S₂(t)) zu vergleichen.

4. Erfassungsvorrichtung nach einem der vorstehenden Ansprüche,
**dadurch gekennzeichnet, dass**
der Schnitt zumindest einer Teilmenge der Sendestrahlungsbündel (30) mit einer in Empfangsrichtung von der Ablenkeinrichtung (18, 20, 22) beabstandeten, im Wesentlichen senkrecht auf der Empfangsrichtung stehenden Nahfeldebene (32) eine Überlappung (34) mit dem Schnitt des Empfangsfelds (28) mit der Nahfeldebene (32) aufweist, und dass
eine Dämpf- oder Ausblendeeinrichtung (26) vorgesehen ist, die ausgebildet und angeordnet ist, um den Anteil von aus dem Bereich der Überlappung (34) zurückgeworfener Strahlung eines Sendestrahlungsbündels (30) zu verringern, der von der Empfangseinrichtung (14, 16) empfangbar ist,
wobei vorzugsweise
die Dämpf- oder Ausblendeeinrichtung (26) als eine, insbesondere auf eine abbildende Einrichtung (14) der Empfangseinrichtung (14, 16) aufgebrachte, Schwärzung ausgebildet ist, insbesondere aufgeklebt ist oder eine Lackierung umfasst.

5. Erfassungsvorrichtung nach einem der vorstehenden Ansprüche,
**dadurch gekennzeichnet, dass**
die Auswerteeinrichtung (24) dazu ausgebildet ist, festzustellen, ob Überprüfungen bestimmter Empfangssignale auf Überschreiten jeweils eines bestimmten vorgegebenen Schwellwertverlaufs (S₁(t), S₂(t)) während eines frühen Zeitintervalls des jeweiligen Schwellwertverlaufs (S₁(t), S₂(t)) eine Kombination von erkannten Überschreitungen und Nicht-Überschreitungen der Schwellwertverläufe (S₁(t), S₂(t)) durch die Empfangssignale ergeben haben, welche Kombination ein vorgegebenes, eine atmosphärische Störung (44) quantifizierendes oder klassifizierendes logisches Kriterium erfüllt, und dazu, bei erfülltem logischen Kriterium ein der atmosphärischen Störung (44) entsprechendes Reichweitenschätzungsmerkmal zu generieren.

6. Erfassungsvorrichtung nach einem der vorstehenden Ansprüche,
**dadurch gekennzeichnet, dass**
die Empfangseinrichtung (14, 16) mehrere Sensorelemente aufweist, die zur Bildung mehrerer Kanäle zumindest im Nahbereich voneinander verschiedene Empfindlichkeiten oder Empfindlichkeitsverläufe aufweisen, insbesondere wobei den verschiedenen Sensorelementen verschiedene Schwellwertverläufe (S₁(t), S₂(t)) zugeordnet sind, mit denen von dem jeweiligen Sensorelement erzeugte Empfangssignale jeweils verglichen werden.

7. Erfassungsvorrichtung nach einem der vorstehenden Ansprüche,
**dadurch gekennzeichnet, dass**
die Auswerteeinrichtung (24) ausgebildet ist, um zur Unterscheidung zwischen einem Objekt (42) und einer atmosphärischen Störung (44) die Kontur eines detektierten Objekts (42) über mehrere Scans hinweg zu erfassen und zu überprüfen, wie sich die erfasste Kontur über die mehreren Scans hinweg verändert.

8. Erfassungsvorrichtung nach einem der vorstehenden Ansprüche,
**dadurch gekennzeichnet, dass**
die Auswerteeinrichtung (24) ausgebildet ist, um die Position eines detektierten Objekts (42) anhand eines Modells der Bewegung des Objekts (42) relativ zu der Erfassungsvorrichtung fortlaufend zu berechnen, wenn von der Auswerteeinrichtung (24) detektiert wurde, dass das Objekt (42) vorhanden ist und in das Nahfeld der Erfassungsvorrichtung eintritt oder eingetreten ist, insbesondere wenn die Auswerteeinrichtung (24) zusätzlich das Vorhandensein einer atmosphärischen Störung (44) in dem Nahfeld detektiert hat.

9. Erfassungsvorrichtung nach einem der vorstehenden Ansprüche,
**dadurch gekennzeichnet, dass**
die Sendeeinrichtung (10, 12) ausgebildet ist, um zur Unterscheidung eines Objekts (42) von einer atmosphärischen Störung (44) mehrere Sendestrahlungsbündel (30) mit einer erhöhten Energie in einen Teilbereich des Erfassungsbereichs auszusenden, in dem sich das detektierte Objekt (42) befindet.

10. Erfassungsvorrichtung nach einem der vorstehenden Ansprüche,
**dadurch gekennzeichnet, dass**
die Sendeeinrichtung (10, 12) so ausgebildet ist, dass der Querschnitt der Sendestrahlungsbündel (30) im Fernfeld der Erfassungsvorrichtung länglich in Richtung einer Längsachse des Querschnitts geformt ist und/oder die Empfangseinrichtung (14, 16) so ausgebildet ist, dass der Querschnitt des Empfangsfelds (28) entlang einer Längsachse des Querschnitts länglich geformt ist, insbesondere wobei die Längsachsen der Querschnitte der Sendestrahlungsbündel (30) und des Empfangsfelds (28) zumindest im Wesentlichen parallel zueinander ausgerichtet sind, und/oder dass die Empfangseinrichtung (14, 16) mehrere entlang einer Längsachse angeordnete Sensorelemente aufweist.

11. Verfahren zur Unterscheidung zwischen Objekten (42) einerseits und atmosphärischen Störungen (44) andererseits, bei dem mehrere Sendestrahlungsbündel (30) mit elektromagnetischer Strahlung mittels einer Sendeeinrichtung (10, 12) in einen Erfassungsbereich einer optoelektronischen Erfassungsvorrichtung ausgesendet werden,
aus dem Erfassungsbereich zurückgeworfene Strahlung von Sendestrahlungsbündeln (30) mittels einer Empfangseinrichtung (14, 16) während eines jeweiligen, auf das Aussenden des jeweiligen Sendestrahlungsbündels (30) folgenden Messintervalls empfangen und wenigstens ein dem jeweiligen Sendestrahlungsbündel (30) zugeordnetes Empfangssignal erzeugt wird, und
mittels einer Ablenkeinrichtung (18, 20, 22) die Sendestrahlungsbündel (30) von der Sendeeinrichtung (10, 12) in den Erfassungsbereich und aus dem Erfassungsbereich zurückgeworfene Strahlung der Sendestrahlungsbündel (30) auf die Empfangseinrichtung (14, 16) gelenkt werden, wobei gesendete Sendestrahlungsbündel (30) mit zunehmender Zeit zunehmend in eine vorgegebene Scan-Richtung abgelenkt werden,
wobei ein Empfangssignal eines Sendestrahlungsbündels (30) während des Messintervalls des Sendestrahlungsbündels (30) mit wenigstens einem von mehreren vorgegebenen Schwellwertverläufen (S₁(t), S₂(t)) verglichen und auf ein Überschreiten des jeweiligen Schwellwertverlaufs (S₁(t), S₂(t)) überprüft wird,
wobei ein erster vorgegebener Schwellwertverlauf (S₁(t)) ein erstes, bezogen auf das jeweilige Messintervall frühes, Zeitintervall aufweist,
wobei ein zweiter vorgegebener und von dem ersten Schwellwertverlauf (S₁(t)) verschiedener Schwellwertverlauf (S₂(t)) ein zweites, bezogen auf das jeweilige Messintervall frühes, Zeitintervall aufweist, wobei über einen relativ zu dem jeweiligen Messintervall definierten Zeitbereich des ersten und zweiten Zeitintervalls hinweg der erste Schwellwertverlauf (S₁(t)) über dem zweiten Schwellwertverlauf (S₂(t)) liegt,
wobei festgestellt wird, ob eine Überprüfung eines Empfangssignals eines Sendestrahlungsbündels (30), welches in einer vorgegebenen örtlichen Nachbarschaftsbeziehung zu einem anderen Sendestrahlungsbündel (30) steht, zu dem ein Empfangssignal gehört, bei dessen Überprüfung ein Überschreiten des zweiten Schwellwertverlaufs (S₂(t)) innerhalb des zweiten Zeitintervalls erkannt wurde, ein Überschreiten des ersten Schwellwertverlaufs (S₁(t)) innerhalb des ersten Zeitintervalls ergeben hat

12. Verfahren nach Anspruch 11,
**dadurch gekennzeichnet, dass**
die vorgegebene örtliche Nachbarschaftsbeziehung so definiert ist, dass sie nur zwischen Sendestrahlungsbündeln (30) besteht, die bis in eine vorgegebene Entfernung von der Ablenkeinrichtung (18, 20, 22) auf demselben erwarteten Objekt (42) liegen.

13. Verfahren nach Anspruch 11 oder 12,
**dadurch gekennzeichnet, dass**
Empfangssignale zeitlich aufeinanderfolgender Sendestrahlungsbündel (30) nach einer vorgegebenen Abfolge, insbesondere von Sendestrahlungsbündel (30) zu Sendestrahlungsbündel (30) abwechselnd, mit dem ersten Schwellwertverlauf (S₁(t)) oder mit dem zweiten Schwellwertverlauf (S₂(t)) verglichen werden,
wobei vorzugsweise
der Empfindlichkeitsverlauf der Empfangseinrichtung (14, 16) modifiziert wird, indem die Empfindlichkeit für aus einem Nahfeld zurückgeworfene Strahlung reduziert wird, wobei insbesondere der Anteil von aus einem Bereich des Nahfelds zurückgeworfener Strahlung, der von der Empfangseinrichtung (14, 16) empfangbar ist, durch eine Dämpf- oder Ausblendeeinrichtung (26) reduziert wird.

14. Verfahren nach einem der Ansprüche 11 bis 13,
**dadurch gekennzeichnet, dass**
festgestellt wird, ob Überprüfungen bestimmter Empfangssignale auf Überschreiten jeweils eines bestimmten vorgegebenen Schwellwertverlaufs (S₁(t), S₂(t)) während eines frühen Zeitintervalls des jeweiligen Schwellwertverlaufs (S₁(t), S₂(t)) eine Kombination von erkannten Überschreitungen und Nicht-Überschreitungen der Schwellwertverläufe (S₁(t), S₂(t)) durch die Empfangssignale ergeben haben, welche Kombination ein vorgegebenes, eine atmosphärische Störung (44) quantifizierendes oder klassifizierendes logisches Kriterium erfüllt, und bei erfülltem logischen Kriterium ein der atmosphärischen Störung (44) entsprechendes Reichweitenschätzungsmerkmal generiert wird.

15. Verfahren nach einem der Ansprüche 11 bis 14,
**dadurch gekennzeichnet, dass**
zur Unterscheidung zwischen einem Objekt (42) und einer atmosphärischen Störung (44) die Kontur eines detektieren Objekts (42) über mehrere Scans hinweg erfasst wird und überprüft wird, wie sich die erfasste Kontur über die mehreren Scans hinweg ändert, und/oder dass
die Position eines detektierten Objekts (42) anhand eines Modells der Objektbewegung relativ zu der Erfassungsvorrichtung fortlaufend berechnet wird, wenn von der Auswerteeinrichtung (24) detektiert wurde, dass das Objekt (42) vorhanden ist und in ein Nahfeld der Erfassungsvorrichtung eintritt oder eingetreten ist, insbesondere wenn die Auswerteeinrichtung (24) zusätzlich das Vorhandensein einer atmosphärischen Störung (44) in dem Nahfeld detektiert hat, und/ oder dass
zur Unterscheidung eines Objekts (42) von einer atmosphärischen Störung (44) mehrere Sendestrahlungsbündel (30) mit einer erhöhten Energie in einen Teilbereich des Erfassungsbereichs ausgesendet werden, in dem sich das detektierte Objekt (42) befindet.

## Claims

1. An optoelectronic detection apparatus, in particular a laser scanner, for distinguishing between objects (42), on the one hand, and atmospheric disturbances (44), on the other hand, comprising a transmission device (10, 12) for transmitting a plurality of transmitted beams of radiation (30) with electromagnetic radiation into a detection zone of the detection apparatus;
a reception device (14, 16) having a reception field (28) from which radiation can be received for receiving radiation from transmitted beams of radiation (30) reflected from the detection region during a respective measurement interval following the transmission of the respective transmitted beam of radiation (30) for generating at least one received signal associated with the respective transmitted beam of radiation (30);
an evaluation unit (24) for evaluating the received signals; and
a deflection device (18, 20, 22) by which the transmitted beam of radiation (30) can be directed by the transmission device (10, 12) into the detection zone and radiation of the transmitted beams of radiation (30) reflected from the detection zone can be directed onto the reception device (14, 16) such that transmitted beams of radiation (30) which are transmitted are increasingly deflected into a predefined scan direction as the time increases,
wherein the evaluation unit (24) is designed
to compare a received signal of a transmitted beam of radiation (30) with at least one of a plurality of predefined threshold value developments (S₁(t), S₂(t)) during the measurement interval of the transmitted beam of radiation (30) and to check for an exceeding of the respective threshold value development (S₁(t), S₂(t)),
wherein a first predefined threshold value development (S₁(t)) has a first time interval related to the respective measurement interval and wherein a second predefined threshold value development (S₂(t)) different from the first threshold value development (S₁(t)) has a second time interval which is early related to the respective measurement interval;
wherein the first threshold value development (S₁(t)) is above the second threshold value development (S₂(t)) over a time range of the first and second time intervals defined relative to the respective measurement interval;
wherein the evaluation unit (24) is designed to determine whether a check of a received signal of a transmitted beam of radiation (30), which is in a predefined spatial proximity relationship to another transmitted beam of radiation (30) which includes a received signal on a check of which an exceeding of the second threshold value development (S₂(t)) was recognised within the second time interval, has resulted in an exceeding of the first threshold value development (S₁(t)) within the first time interval.

2. A detection apparatus in accordance with claim 1,
**characterised in that**
the predefined spatial proximity relationship is defined such that it is only present between transmitted beams of radiation (30) which are disposed up to and at a predefined distance from the deflection device (18, 20, 22) on the same expected object (42).

3. A detection apparatus in accordance with one of the preceding claims,
**characterised in that**
the evaluation device (24) is designed to compare received signals of transmitted beams of radiation (30) following one another in time in accordance with a predefined sequence, in particular alternately from transmitted beam of radiation (30) to transmitted beam of radiation (30), with the first threshold value development (S₁)(t)) or with the second threshold value development (S₂(t)).

4. A detection apparatus in accordance with any one of the preceding claims,
**characterised in that**
the intersection of at least a subset of the transmitted beam of radiation (30) with a near field plane (32) spaced apart from the deflection device (18, 20, 22) in the direction of reception and substantially standing perpendicular on the direction of reception has an overlap (34) with the intersection of the reception field (28) with the near field plane (32); and **in that**
a damping or masking device (26) is provided which is designed and arranged to reduce the portion of radiation of a transmitted beam of radiation (30) which is reflected from the region of the overlap (34) and which can be received by the reception device (14, 16),
with preferably
the damping or masking device (26) being formed as a blackening, in particular applied to an imaging device (14) of the reception device (14, 16), in particular being adhesively bonded on or comprising a coating.

5. A detection apparatus in accordance with any one of the preceding claims,
**characterised in that**
the evaluation device (24) is designed to determine whether examinations of specific received signals for an exceeding of a respective specific predefined threshold value development (S₁(t), S₂(t)) during an early time interval of the respective threshold value development (S₁(t), S₂(t)) have produced a combination of recognized exceeding procedures and non-exceeding procedures of the threshold value developments (S₁(t), S₂(t)) by the received signals, which combination satisfies a predefined logical criterion quantifying or classifying an atmospheric disturbance (44) and, for this purpose, to generate a range estimate feature corresponding to the atmospheric disturbance (44) with a satisfied logical criterion.

6. A detection apparatus in accordance with any one of the preceding claims,
**characterised in that**
the reception device (14, 16) has a plurality of sensor element which have mutually different sensitivities or sensitivity developments at least in the near zone for forming a plurality of channels, with in particular different threshold value developments (S₁(t), S₂(t)) being associated with the different sensor elements with which received signals generated by the respective sensor element are respectively compared.

7. A detection apparatus in accordance with any one of the preceding claims,
**characterised in that**
the evaluation device (24) is designed to detect the contour of a detected object (42) over a plurality of scans for distinguishing between an object (42) and an atmospheric disturbance (44) and to check how the detected contour changes over the plurality of scans.

8. A detection apparatus in accordance with any one of the preceding claims,
**characterised in that**
the evaluation device (24) is designed to calculate the position of a detected object (42) continuously with reference to a model of the movement of the object (42) relative to the detection apparatus when it was detected by the evaluation device (24) that the object (42) is present and is entering or has entered into the near field of the detection apparatus, in particular when the evaluation device (24) has additionally detected the presence of an atmospheric disturbance (44) in the near field.

9. A detection apparatus in accordance with any one of the preceding claims,
**characterised in that**
the transmission device (10, 12) is designed to transmit a plurality of transmitted beams of radiation (30) with an increased energy into a part region of the detection zone in which the detected object is located (42) for distinguishing an object (42) from an atmospheric disturbance (44).

10. A detection apparatus in accordance with any one of the preceding claims,
**characterised in that**
the transmission device (10, 12) is designed so that the cross-section of the transmitted beams of radiation (30) in the far field of the detection apparatus is shaped in elongate form in the direction of a longitudinal axis of the cross-section; and/or **in that** the reception device (14, 16) is designed so that the cross-section of the reception field (28) is shaped in elongate form along a longitudinal axis of the cross-section, in particular with the longitudinal axes of the cross-sections of the transmitted beams of radiation (30) and of the reception field (28) being aligned at least substantially parallel to one another; and/or **in that**
the reception device (14, 16) has a plurality of sensor elements arranged along a longitudinal axis.

11. A method for distinguishing between objects (42), on the one hand, and atmospheric disturbances (44), on the other hand, wherein
a plurality of transmitted beams of radiation (30) are transmitted with electromagnetic radiation by means of a transmission device (10, 12) into a detection zone of an optoelectronic detection apparatus;
radiation of transmitted beams of radiation (30) reflected from the detection zone is received by means of a reception device (14, 16) during a respective measurement interval following the transmission of the respective transmitted beam of radiation (30) and at least one received signal associated with the respective transmitted beam of radiation (30) is generated; and
the transmitted beam of radiation (30) is directed by means of a deflection device (18, 20, 22) from the transmission device (10, 12) into the detection zone and radiation of the transmitted beam of radiation (30) reflected from the detection zone is directed to the reception device (14, 16), with transmitted beams of radiation (30) which are transmitted being increasingly deflected into a predefined scan direction as the time increases;
wherein a received signal of a transmitted beam of radiation (30) is compared with at least one of a plurality of predefined threshold value developments (S₁(t), S₂(t)) during the measurement interval of the transmitted beam of radiation (30) and is checked for an exceeding of the respective threshold value development (S₁(t), S₂(t)); wherein a first predefined threshold value development (S₁(t)) has a first time interval related to the respective measurement interval; wherein a second predefined threshold development (S₂(t)) differing from the first threshold value development (S₁(t)) has a second time interval which is early with respect to the respective measurement interval, with the first threshold value development (S₁(t)) being above the second threshold value development (S₂(t)) over a time range of the first and second time intervals defined relative to the respective measurement interval;
wherein it is determined whether a check of a received signal of a transmitted beam of radiation (30,) which is in a predefined spatial proximity relationship with another transmitted beam of radiation (30) which includes a received signal on whose check an exceeding of the second threshold value development (S₂(t)) was recognized within the second time interval, has resulted in an exceeding of the first threshold value development (S₁(t)) within the first time interval.

12. A method in accordance with claim 11,
**characterised in that**
the predefined spatial proximity relationship is defined such that it is only present between transmitted beams of radiation (30) which are disposed up to and at a predefined distance from the deflection device (18, 20, 22) on the same expected object (42).

13. A method in accordance with claim 11 or claim 12, **characterised in that**
received signals of transmitted beams of radiation (30) following one another in time in accordance with a predefined sequence, in particular alternating from transmitted beam of radiation (30) to transmitted beam of radiation (30), are compared with the first threshold value development (S₁(t)) or with the second threshold value development (S₂(t)),
with preferably
the sensitivity development of the reception device (14, 16) being modified **in that** the sensitivity for radiation reflected from a near field is reduced, with in particular the portion of radiation reflected from a region of the near field and receivable by the reception device (14, 16) being reduced by a damping or masking device (26).

14. A method in accordance with any one of the claims 11 to 13,
**characterised in that**
it is determined whether checks of specific received signals for an exceeding of a respective specific predefined threshold value development (S₁(t), S₂(t)) during an early time interval of the respective threshold value development (S₁(t), S₂(t)) has produced a combination of recognized exceeding procedures and non-exceeding procedures of the threshold value developments (S₁(t), S₂(t)) by the received signals, which combination satisfies a predefined logical criterion quantifying or classifying an atmospheric disturbance (44) and on a satisfied logical criterion, a range estimate feature corresponding to the atmospheric disturbance (44) is generated.

15. A method in accordance with any one of the claims 11 to 14,
**characterised in that**
the contour of a detected object (42) is detected over a plurality of scans for distinguishing between an object (42) and an atmospheric disturbance (44) and a check is made how the detected contour varies over the plurality of scans; and/or **in that** the position of a detected object (42) is continuously calculated with reference to a model of the object movement relative to the detection apparatus when it was detected by the evaluation device (24) that the object (42) is present and is entering or has entered into a near field of the detection apparatus, in particular when the evaluation device (24) has additionally detected the presence of an atmospheric disturbance (44) in the near field; and/or **in that** a plurality of transmitted beams of radiation (30) having an increased energy are transmitted into a part region of the detection zone in which the detected object (42) is located for distinguishing an object (42) from atmospheric disturbance (44).

## Revendications

1. Dispositif de détection optoélectronique, en particulier scanneur à laser, pour faire une distinction entre des objets (42) d'une part et des perturbations atmosphériques (44) d'autre part, comprenant un système émetteur (10, 12) pour émettre plusieurs faisceaux de rayonnement émis (30) avec un rayonnement électromagnétique dans une zone de détection du dispositif de détection,
un système récepteur (14, 16) avec un champ de réception (28) avec lequel le rayonnement peut être reçu, afin de recevoir le rayonnement, renvoyé depuis la zone de détection, des faisceaux de rayonnement émis (30) pendant un intervalle de mesure respectif qui suit l'émission du faisceau de rayonnement émis (30) respectif, et générer au moins un signal de réception associé au faisceau de rayonnement émis (30) respectif,
une unité d'évaluation (24) pour évaluer les signaux reçus, et
un système de déflexion (18, 20, 22) au moyen duquel le faisceau de rayonnement émis (30) par le système émetteur (10, 12) peut être défléchi vers la zone de détection, et le rayonnement, renvoyé depuis la zone de détection, du faisceau de rayonnement émis (30) peut être défléchi vers le système récepteur (14, 16) de telle manière que le faisceau de rayonnement émis (30) est défléchi au cours du temps de manière croissante dans une direction de scannage prédéterminée,
dans lequel l'unité d'évaluation (24) est réalisée pour comparer un signal reçu d'un faisceau de rayonnement émis (30) pendant l'intervalle de mesure du faisceau de rayonnement émis (30) avec au moins une évolution parmi plusieurs évolutions prédéterminées de valeur seuil (S₁(t), S₂(t)) et pour vérifier vis-à-vis d'un dépassement de l'évolution respective de valeur seuil (S₁(t), S₂(t)),
dans lequel une première évolution prédéterminée de valeur seuil (S₁(t)) présente un premier intervalle temporel, précoce par référence à l'intervalle de mesure respectif, et
dans lequel une seconde évolution prédéterminée de valeur seuil (S₂(t)), différente de la première évolution de valeur seuil (S₁(t)), présente un second intervalle temporel, précoce par référence à l'intervalle de mesure respectif,
dans lequel, sur une plage temporelle, définie par rapport à l'intervalle de mesure respectif, au-delà du premier et du second intervalle temporel, la première évolution de valeur seuil (S₁(t)) est au-dessus de la seconde évolution de valeur seuil (S₂(t)),
dans lequel l'unité d'évaluation (24) est réalisée pour constater si une vérification d'un signal reçu d'un faisceau de rayonnement émis (30), qui se trouve dans une relation de voisinage local prédéterminée vis-à-vis d'un autre faisceau de rayonnement émis (30), auquel appartient un signal reçu, lors de la vérification duquel un dépassement de la seconde évolution de valeur seuil (S₂(t)) a été reconnu à l'intérieur du second intervalle temporel, a donné en résultat un dépassement de la première évolution de valeur seuil (S₁(t)) à l'intérieur du premier intervalle temporel.

2. Dispositif de détection selon la revendication 1,
**caractérisé en ce que** la relation de voisinage local prédéterminée est ainsi définie qu'elle existe uniquement entre des faisceaux de rayonnement émis (30) qui se trouvent jusqu'à un éloignement prédéterminé depuis le dispositif de déflexion (18, 20, 22) vers le même objet attendu (42).

3. Dispositif de détection selon l'une des revendications précédentes,
**caractérisé en ce que** l'unité d'évaluation (24) est réalisée pour comparer des signaux reçus de faisceaux de rayonnement émis (30) qui se suivent dans le temps suivant une succession prédéterminée, en particulier en alternance d'un faisceau de rayonnement émis (30) à un autre faisceau de rayonnement émis (30), avec la première évolution de valeur seuil (S₁(t)) ou avec la seconde évolution de valeur seuil (S₂(t)).

4. Dispositif de détection selon l'une des revendications précédentes,
**caractérisé en ce que**
l'intersection d'au moins un groupe partiel des faisceaux de rayonnement émis (30) avec un plan de champ proche (32), écarté du dispositif de déflexion (18, 20, 22) en direction de réception et disposé essentiellement perpendiculairement par rapport à la direction de réception, présente un chevauchement (34) avec l'intersection du champ de réception (28) avec le plan de champ proche (32), et **en ce que**
il est prévu un dispositif d'amortissement ou d'occultation (26), qui est réalisé et agencé afin de réduire la part de rayonnement, renvoyée depuis la zone de chevauchement (34), d'un faisceau de rayonnement émis (30) qui peut être reçu par le système récepteur (14, 16),
dans lequel de préférence
le dispositif d'amortissement ou d'occultation (26) est réalisé comme un noircissement, appliqué en particulier sur un système d'imagerie (14) du système récepteur (14, 16), en particulier collé, ou inclut une peinture.

5. Dispositif de détection selon l'une des revendications précédentes,
**caractérisé en ce que** l'unité d'évaluation (24) est réalisée pour constater si des vérifications de certains signaux reçus vis-à-vis d'un dépassement respectif d'une certaine évolution prédéterminée de valeur seuil (S₁(t), S₂(t)) pendant un intervalle temporel précoce de l'évolution de valeur seuil respective (S₁(t), S₂(t)) ont donné en résultat une combinaison de dépassements et de non-dépassements reconnus des évolutions de valeur seuil (S₁(t), S₂(t)) par les signaux reçus, ladite combinaison satisfaisant à un critère logique prédéterminé qui quantifie ou qui classifie une perturbation atmosphérique (44), et pour générer, lorsque le critère logique est satisfait, une caractéristique d'estimation de distance correspondant à la perturbation atmosphérique (44).

6. Dispositif de détection selon l'une des revendications précédentes,
**caractérisé en ce que** le système récepteur (14, 16) comprend plusieurs éléments capteurs qui, pour réaliser plusieurs canaux, présentent au moins dans la zone proche des sensibilités ou des évolutions de sensibilité différentes les unes des autres, en particulier dans lequel des évolutions de valeur seuil différentes (S₁(t), S₂(t)) sont associées aux différents éléments capteurs, avec lesquelles les signaux reçus générés par l'élément capteur respectif sont respectivement comparés.

7. Dispositif de détection selon l'une des revendications précédentes,
**caractérisé en ce que** l'unité d'évaluation (24) est réalisée, afin de faire la distinction entre un objet (42) et une perturbation atmosphérique (44), pour détecter le contour d'un objet détecté (42) sur plusieurs scannages, et vérifier de quelle manière le contour détecté se modifie au cours des plusieurs scannages.

8. Dispositif de détection selon l'une des revendications précédentes,
**caractérisé en ce que** l'unité d'évaluation (24) est réalisée pour calculer de manière continue la position d'un objet détecté (42) au moyen d'un modèle du mouvement de l'objet (42) par rapport au dispositif de détection, lorsque l'unité d'évaluation (24) a détecté que l'objet (42) est présent et qu'il pénètre ou qu'il a pénétré dans le champ proche du dispositif de détection, en particulier quand l'unité d'évaluation (24) a en outre détecté la présence d'une perturbation atmosphérique (44) dans le champ proche.

9. Dispositif de détection selon l'une des revendications précédentes,
**caractérisé en ce que** le système émetteur (10, 12) est réalisé, afin de distinguer un objet (42) vis-à-vis d'une perturbation atmosphérique (44), pour émettre plusieurs faisceaux de rayonnement émis (30) présentant une plus forte énergie dans une région partielle de la zone de détection dans laquelle se trouve l'objet détecté (42).

10. Dispositif de détection selon l'une des revendications précédentes,
**caractérisé en ce que**
le système émetteur (10, 12) est réalisé de telle façon que la section du faisceau de rayonnement émis (30) dans le champ éloigné du dispositif de détection est conformée de façon allongée en direction d'un axe longitudinal de la section et/ou le système récepteur (14, 16) est réalisé de telle façon que la section du champ de réception (28) est conformée de façon allongée le long d'un axe longitudinal de la section, et en particulier dans lequel les axes longitudinaux des sections du faisceau de rayonnement émis (30) et du champ de réception (28) sont orientés au moins sensiblement parallèlement l'un à l'autre, et/ou **en ce que**
le système récepteur (14, 16) comprend plusieurs éléments capteurs agencés le long d'un axe longitudinal.

11. Procédé pour faire une distinction entre des objets (42) d'une part et des perturbations atmosphériques (44) d'autre part, dans lequel on émet plusieurs faisceaux de rayonnement émis (30) avec un rayonnement électromagnétique au moyen d'un système émetteur (10, 12) vers une zone de détection d'un dispositif de détection optoélectronique,
on reçoit le rayonnement, renvoyé depuis la zone de réception, des faisceaux de rayonnement émis (30) au moyen d'un système récepteur (14, 16) pendant un intervalle de mesure respectif qui suit l'émission du faisceau de rayonnement émis (30) respectif, et on génère au moins un signal reçu associé au faisceau de rayonnement émis (30) respectif, et
au moyen d'un dispositif de déflexion (18, 20, 22), on défléchit le faisceau de rayonnement émis (30) par le système émetteur (10, 12) vers la zone de détection et on défléchit le rayonnement, renvoyé depuis la zone de détection, du faisceau de rayonnement émis (30) vers le système récepteur (14, 16), et de sorte que le faisceau de rayonnement émis (30) est défléchi au cours du temps de manière croissante dans une direction de scannage prédéterminée,
dans lequel on compare un signal reçu d'un faisceau de rayonnement émis (30) pendant l'intervalle de mesure du faisceau de rayonnement émis (30) avec au moins une évolution parmi plusieurs évolutions prédéterminées de valeur seuil (S₁(t), S₂(t)), et on le vérifie vis-à-vis d'un dépassement de l'évolution de valeur seuil (S₁(t), S₂(t)) respective,
dans lequel une première évolution de valeur seuil prédéterminée (S₁(t)) présente un premier intervalle temporel, précoce par rapport à l'intervalle de mesure respectif,
dans lequel une seconde évolution de valeur seuil prédéterminée (S₂(t)), différente de la première évolution de valeur seuil (S₁(t)) présente un second intervalle temporel, précoce par rapport à l'intervalle de mesure respectif,
dans lequel, sur une plage temporelle, définie par rapport à l'intervalle de mesure respectif, au-delà du premier et du second intervalle temporel, la première évolution de valeur seuil (S₁(t)) est au-dessus de la seconde évolution de valeur seuil (S₂(t)),
dans lequel on constate si une vérification d'un signal reçu d'un faisceau de rayonnement émis (30), qui se trouve dans une relation de voisinage local prédéterminée vis-à-vis d'un autre faisceau de rayonnement émis (30), auquel appartient un signal reçu, lors de la vérification duquel un dépassement de la seconde évolution de valeur seuil (S₂(t)) a été reconnu à l'intérieur du second intervalle temporel, a donné en résultat un dépassement de la première évolution de valeur seuil (S₁(t)) à l'intérieur du premier intervalle temporel.

12. Procédé selon la revendication 11,
**caractérisé en ce que** la relation de voisinage local prédéterminée est ainsi définie qu'elle existe uniquement entre des faisceaux de rayonnement émis (30) qui se trouvent jusqu'à un éloignement prédéterminé depuis le dispositif de déflexion (18, 20, 22) vers le même objet attendu (42).

13. Procédé selon la revendication 11 ou 12,
**caractérisé en ce que** l'on compare des signaux reçus de faisceaux de rayonnement émis (30) qui se suivent dans le temps suivant une succession prédéterminée, en particulier en alternance d'un faisceau de rayonnement émis (30) à un autre faisceau de rayonnement émis (30), avec la première évolution de valeur seuil (S₁(t)) ou avec la seconde évolution de valeur seuil (S₂(t)),
et dans lequel de préférence
on modifie l'évolution de sensibilité du système récepteur (14, 16) en réduisant la sensibilité pour le rayonnement renvoyé depuis un champ proche, et en particulier la part du rayonnement, renvoyée par une zone du champ proche, qui peut être reçue par le système récepteur (14, 16), est réduite par un système d'amortissement ou d'occultation (26).

14. Procédé selon l'une des revendications 11 à 13,
**caractérisé en ce que** l'on constate si des vérifications de certains signaux reçus vis-à-vis d'un dépassement respectif d'une certaine évolution prédéterminée de valeur seuil (S₁(t), S₂(t)) pendant un intervalle temporel précoce de l'évolution de valeur seuil respective (S₁(t), S₂(t)) ont donné en résultat une combinaison de dépassements et de non-dépassements reconnus des évolutions de valeur seuil (S₁(t), S₂(t)) par les signaux reçus, ladite combinaison satisfaisant à un critère logique prédéterminé qui quantifie ou qui classifie une perturbation atmosphérique (44), et on génère, lorsque le critère logique est satisfait, une caractéristique d'estimation de distance correspondant à la perturbation atmosphérique (44).

15. Procédé selon l'une des revendications 11 à 14,
**caractérisé en ce que**, afin de faire la distinction entre un objet (42) et une perturbation atmosphérique (44), on détecte le contour d'un objet détecté (42) sur plusieurs scannages, et on vérifie de quelle manière le contour détecté se modifie au cours des plusieurs scannages,
et/ou **en ce que**
l'on calcule de manière continue la position d'un objet détecté (42) au moyen d'un modèle du mouvement de l'objet (42) par rapport au dispositif de détection, lorsque l'unité d'évaluation (24) a détecté que l'objet (42) est présent et qu'il pénètre ou qu'il a pénétré dans le champ proche du dispositif de détection, en particulier quand l'unité d'évaluation (24) a en outre détecté la présence d'une perturbation atmosphérique (44) dans le champ proche,
et/ou **en ce que**
afin de distinguer un objet (42) vis-à-vis d'une perturbation atmosphérique (44), on émet plusieurs faisceaux de rayonnement émis (30) présentant une plus forte énergie dans une région partielle de la zone de détection dans laquelle se trouve l'objet détecté (42).
